(19) Europäisches Patentamt / European Patent Office / Office européen des brevets

(11) **EP 2 978 178 B1**

(12) **FASCICULE DE BREVET EUROPEEN**

(45) Date de publication et mention de la délivrance du brevet:
**20.07.2016 Bulletin 2016/29**

(51) Int Cl.:
***H04L 12/825*** *(2013.01)*   ***H04L 12/911*** *(2013.01)*
***H04L 12/913*** *(2013.01)*

(21) Numéro de dépôt: **15177436.1**

(22) Date de dépôt: **20.07.2015**

(54) **PROCÉDÉ DE RÉGULATION DYNAMIQUE DE DÉBITS DE CONSIGNE DANS UN RÉSEAU SUR PUCE, PROGRAMME D'ORDINATEUR ET DISPOSITIF DE TRAITEMENT DE DONNÉES CORRESPONDANTS**

VERFAHREN ZUR DYNAMISCHEN REGULIERUNG VON SOLLWERT-DATENRATEN IN EINEM NETZ AUF CHIP, ENTSPRECHENDES COMPUTERPROGRAMM UND ENTSPRECHENDE DATENVERARBEITUNGSVORRICHTUNG

METHOD FOR DYNAMICALLY CONTROLLING TARGET BITRATES IN A NETWORK-ON-CHIP, CORRESPONDING COMPUTER PROGRAM AND DATA PROCESSING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2014 FR 1457242**

(43) Date de publication de la demande:
**27.01.2016 Bulletin 2016/04**

(73) Titulaire: **Commissariat à l'Énergie Atomique et aux Énergies Alternatives 75015 Paris (FR)**

(72) Inventeurs:
• **DURAND, Yves 38330 Saint-Ismier (FR)**
• **BERNARD, Christian 38960 Saint Etienne de Crossey (FR)**

(74) Mandataire: **Bonnet, Michel Cabinet Bonnet 93, rue Réaumur - Boîte 10 75002 Paris (FR)**

(56) Documents cités:
**WO-A1-01/28167**

• **J M Jaffe: "Bottleneck Flow Control", , 7 juillet 1981 (1981-07-07), pages 954-962, XP055194901, Extrait de l'Internet: URL:http://ieeexplore.ieee.org/ielx5/26/23 940/01095081.pdf?tp=&arnumber=1095081&isn u mber=23940 [extrait le 2015-06-10]**
• **STEVEN H LOW ET AL: "Optimization Flow Control-I: Basic Algorithm and Convergence", IEEE / ACM TRANSACTIONS ON NETWORKING, IEEE / ACM, NEW YORK, NY, US, vol. 7, no. 6, 1 décembre 1999 (1999-12-01), XP011039248, ISSN: 1063-6692**

EP 2 978 178 B1

## Description

La présente invention concerne un procédé de régulation dynamique de débits de consigne dans un réseau sur puce. Elle concerne également un programme d'ordinateur et un dispositif de traitement de données correspondants.

Dans un système intégré, la communication entre les unités de calcul se fait au moyen d'un réseau sur puce. Le trafic dans ce réseau doit être régulé de façon précise pour éviter toute congestion tout en assurant la meilleure efficacité possible dans le transfert des données. Une telle régulation peut se faire à la source à l'aide d'un limiteur de trafic dont la fonction est de réguler les données injectées dans le réseau en fonction de débits de consigne affectés respectivement à toutes les sources émettrices de ces données.

L'invention s'applique ainsi plus particulièrement à un procédé de régulation dynamique de débits de consigne de sources émettrices de paquets de données vers des cibles réceptrices de ces paquets de données dans un réseau sur puce comportant une pluralité de noeuds, parmi lesquels se trouvent les sources et les cibles, et une pluralité de liens entre ces noeuds pour la transmission des paquets de données. Dans une configuration topologique donnée et pour une activité donnée des sources d'émission, chaque source active émet ses paquets de données vers une cible selon un canal de transmission point à point, défini par un ensemble de noeuds et de liens entre ces noeuds, et selon un débit de consigne défini pour cette source ou, de façon équivalente, pour ce canal de transmission. L'ensemble de ces canaux de transmission définit ce que l'on appelle une configuration de routage. Chaque lien étant susceptible d'appartenir à plusieurs canaux de transmission différents et présentant lui-même une capacité de débit maximal qui lui est propre, une optimisation des débits de consigne dans une configuration de routage donnée est nécessaire pour fluidifier le trafic de données tout en respectant les besoins en flux de chacune des sources. Cette optimisation est généralement complexe mais importante parce que l'on cherche à utiliser au mieux la bande passante globalement disponible dans le réseau sur puce.

Dans le domaine plus général des réseaux à transmission de données par paquets, de nombreuses études ont été menées et différentes méthodes d'optimisation distribuée entre les noeuds d'un réseau ont été proposées.

Ainsi par exemple, dans l'article de Jaffe, intitulé « Bottleneck flow control », publié dans IEEE Transactions on Communications, vol. COM-29, n° 7, Juillet 1981, il est proposé un procédé itératif de régulation de débit à la source comportant une répétition des étapes suivantes :

- pour chaque lien d'un réseau sollicité par la transmission de paquets de données et en fonction de débits de consigne définis pour chaque source émettrice et chaque canal de transmission correspondant, l'estimation d'une marge de débit disponible incluant l'estimation d'une marge calculée sur la base d'une capacité de débit maximal du lien,
- pour chaque source émettrice d'au moins un paquet de données, le calcul et l'application d'une mise à jour de son débit de consigne en fonction des marges de débits disponibles estimées.

Plus précisément, la marge calculée pour chaque lien tient compte de la différence entre le débit maximal que peut supporter ce lien et la somme des débits de consigne des canaux de transmission incluant ce lien.

Plus précisément également l'itération des deux étapes précédentes est répétée tant que toutes les sources émettrices ne sont pas saturées, c'est-à-dire tant qu'il existe au moins une source dont aucun lien du canal de transmission associé n'est saturé selon un critère de saturation prédéterminé.

D'autres méthodes d'optimisation procèdent d'une formalisation différente, par optimisation globale non linéaire à l'aide d'un solveur, mais restent distribuées. De telles méthodes sont par exemple décrites dans l'article de Kelly, intitulé « Charging and rate control for elastic traffic », publié dans European Transactions on Télécommunications, vol. 8 (1997), pages 33-37, ou dans l'article de Low et al, intitulé « Optimization flow control, I: basic algorithm and convergence », publié dans IEEE/ACM Transactions on Networking, 7(6), pages 861-874, décembre 1999.

Toutes ces méthodes sont directement transposables dans le domaine des transmissions de données dans un réseau sur puce.

Mais comme cela a par ailleurs été montré dans l'article de Zhang, intitulé « Service disciplines for guaranteed performance service in packet-switching networks », publié dans Proceedings of the IEEE, vol. 83, n° 10, octobre 1995, la prise en compte de la capacité en débit de chaque lien ne suffit pas à garantir une absence de congestion. Il existe en effet un phénomène de distorsion de forme de trafic dû à des dépassements sporadiques possibles des débits de consigne aux points de convergences entre canaux de transmission. Ces dépassements sporadiques ont notamment été identifiés et formalisés dans l'article de Cruz, intitulé « A calculus for network delay, Part I: network elements in isolation » publié dans IEEE Transactions on Information Theory, vol. 37, n° 1, janvier 1991, puis dans l'article de Zhang précité. Un autre exemple de l'art antérieur se trouve dans "Bottle Neck Flow Control", 7 juillet 1981 J M Jaffe page 954-962.

Les solutions consistant alors à prévoir éventuellement une marge constante supplémentaire pour éviter ces congestions ne sont cependant pas satisfaisantes parce que non optimales.

Il peut ainsi être souhaité de prévoir un procédé de régulation dynamique de débits de consigne dans un réseau

sur puce qui permet de s'affranchir d'au moins une partie des problèmes et contraintes précités.

Il est donc proposé un procédé de régulation dynamique de débits de consigne de sources émettrices de paquets de données vers des cibles réceptrices de ces paquets de données dans un réseau sur puce comportant une pluralité de noeuds, parmi lesquels se trouvent les sources et les cibles, et une pluralité de liens entre ces noeuds pour la transmission des paquets de données, comportant :

- pour chaque lien du réseau sur puce sollicité par la transmission des paquets de données, l'estimation d'une marge de débit disponible incluant l'estimation d'une première marge calculée sur la base d'une capacité de débit maximal du lien,
- pour chaque source émettrice d'au moins un paquet de données, le calcul et l'application d'une mise à jour de son débit de consigne en fonction des marges de débits disponibles estimées,

dans lequel l'estimation de la marge de débit disponible pour chaque lien comporte en outre :

- l'estimation d'une deuxième marge calculée sur la base d'une capacité d'absorption locale maximale, par mémoire tampon, de dépassements sporadiques possibles des débits de consigne,
- la détermination d'une valeur de la marge de débit disponible en fonction des première et deuxième marges calculées.

Chaque lien du réseau sur puce peut en effet être vu comme l'association d'une connexion physique point à point, entre deux noeuds voisins dans une certaine direction, et d'au moins une mémoire tampon. Cette mémoire tampon peut être une mémoire tampon de sortie du noeud de départ du lien ou une mémoire tampon d'entrée dans le noeud d'arrivée du lien. Quel que soit le modèle choisi, cette mémoire tampon possède une capacité limitée d'absorption de dépassements sporadiques des débits de consigne pouvant survenir aux points de convergences des canaux de transmission et il est judicieux d'en tenir compte.

Ainsi selon l'invention, cette capacité d'absorption locale maximale de dépassements sporadiques possibles des débits de consigne est prise en compte au niveau du routage entre les liens du réseau sur puce dans la détermination des marges à distribuer entre sources émettrices, de sorte que la régulation des débits de consigne peut se faire de façon vraiment optimale.

De façon optionnelle, pour une configuration de routage donnée incluant un ensemble de canaux de transmission des paquets de données entre les sources et les cibles, les étapes d'estimation des marges de débits disponibles et de calcul de mises à jour des débits de consigne sont exécutées uniquement pour des canaux de transmission non saturés, c'est-à-dire des canaux de transmission n'ayant encore aucun lien sans marge de débit disponible, et répétées jusqu'à ce que tous les canaux de transmission soient saturés.

De façon optionnelle également :

- l'estimation de la première marge notée « $rC_{lnk}$ » pour chaque lien noté « lnk », calculée sur la base de la capacité de débit maximal du lien notée « $C_{lnk}$ », est effectuée sur la base de l'équation suivante :

$$rc_{lnk} = C_{lnk} - \varepsilon - \sum_{ch \in CC_{lnk}} \rho_{ch},$$

dans laquelle $\varepsilon$ est une constante de marge résiduelle en dessous de laquelle on considère que la marge de débit disponible est nulle pour ce lien, $CC_{lnk}$ est l'ensemble des canaux de transmission notés « ch » qui incluent le lien lnk et $\rho_{ch}$ désigne le débit de consigne du canal de transmission ch, et

- l'estimation de la deuxième marge notée « $rd_{lnk}$ » pour chaque lien lnk, calculée sur la base de la capacité d'absorption locale maximale du lien notée « $BF_{lnk}$ », est effectuée sur la base de l'équation suivante :

$$rd_{lnk} = BF_{lnk} - \varepsilon - \sum_{ch \in CC_{lnk}} D_{ch,lnk} \cdot \rho_{ch},$$

dans laquelle $D_{ch,lnk}$ désigne un coefficient prédéterminé propre à chaque lien de chaque canal de transmission.

De façon optionnelle également, la régulation de débit étant faite à la source par fenêtre glissante selon une discipline d'arbitrage de type « work conserving » :

- la capacité d'absorption locale maximale de chaque lien lnk est définie par l'équation suivante :

3

$$BF_{lnk} = QSIZE - \frac{(N_{lnk} - 1)}{N_{lnk}} \cdot DMAX \cdot Tw \, ,$$

dans laquelle QSIZE est la taille de la mémoire tampon associée au lien lnk, $N_{lnk}$ est le nombre de canaux de transmission passant par le lien lnk, DMAX est une constante de débit instantané maximal d'injection et Tw est la longueur de la fenêtre glissante, et

- chaque coefficient $D_{ch,lnk}$ est défini par l'équation suivante :

$$D_{ch,lnk} = \sum_{l \epsilon RR_{ch,lnk}} d_{l,ch} \, ,$$

dans laquelle $RR_{ch,lnk}$ est l'ensemble des liens traversés en amont du lien lnk dans le canal de transmission ch, « l » désignant l'un de ces liens, et $d_{l,ch}$ est un coefficient défini par $d_{l,ch} = (nd_l - 1) \bullet PSIZE$, où $nd_l$ est le nombre de directions contributrices sur la mémoire tampon associée au lien l et PSIZE est la taille maximale des paquets de données exprimée dans la même unité que QSIZE.

De façon optionnelle également, les étapes d'estimation des marges de débits disponibles et de calcul de mises à jour des débits de consigne sont exécutées de façon séquentielle, cette séquence étant elle-même exécutée de façon itérative.

De façon optionnelle également, les étapes d'estimation des marges de débits disponibles et de calcul de mises à jour des débits de consigne sont séquentiellement exécutées à l'aide de barrières de synchronisation implémentées sous la forme de décompteurs de messages pour chaque lien du réseau sur puce sollicité par la transmission des paquets de données et pour chaque source émettrice d'au moins un paquet de données.

De façon optionnelle également, les étapes d'estimation des marges de débits disponibles et de calcul de mises à jour des débits de consigne sont exécutées de façon incrémentielle et entrelacée par une sérialisation de messages de régulation dynamique des débits de consigne selon des chemins prédéfinis.

De façon optionnelle également, la valeur de marge de débit disponible est déterminée pour chaque lien en tant que minimum entre les première et deuxième marges calculées pour ce lien.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé de régulation dynamique de débits de consigne selon l'invention, lorsque ledit programme est exécuté sur un ordinateur.

Enfin, il est également proposé un dispositif de traitement de données à réseau sur puce, comportant :

- une pluralité de noeuds, parmi lesquels se trouvent des sources émettrices de paquets de données et des cibles réceptrices de ces paquets de données,
- une pluralité de liens entre ces noeuds pour la transmission des paquets de données, et
- des calculateurs de régulation dynamique de débits de consigne des sources, répartis entre les noeuds du réseau sur puce et programmés pour :

  • pour chaque lien du réseau sur puce sollicité par la transmission des paquets de données, estimer une marge de débit disponible en estimant une première marge calculée sur la base d'une capacité de débit maximal du lien,
  • pour chaque source émettrice de paquets de données, calculer une mise à jour de son débit de consigne en fonction des marges de débits disponibles estimées,

dans lequel chaque calculateur programmé pour estimer la marge de débit disponible de l'un quelconque des liens est en outre programmé pour :

- estimer une deuxième marge calculée sur la base d'une capacité d'absorption locale maximale, par mémoire tampon, de dépassements sporadiques possibles des débits de consigne,
- déterminer une valeur de la marge de débit disponible en fonction des première et deuxième marges calculées.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de traitement de données à réseau sur puce, selon un mode de réalisation de l'invention,

- la figure 2 représente schématiquement la structure générale d'un exemple de routeur disposé au niveau d'un noeud de réseau du dispositif de traitement de données de la figure 1,
- la figure 3 illustre les étapes successives d'un procédé de régulation dynamique de débits de consigne mis en oeuvre dans le dispositif de traitement de données de la figure 1,
- la figure 4 est un exemple simplifié d'exécution du procédé de régulation de la figure 3, avec la mise en oeuvre d'un mécanisme de synchronisation selon un premier mode de réalisation de l'invention,
- les figures 5 et 6 illustrent schématiquement les fonctionnements de liens et de sources du dispositif de traitement de données de la figure 1 pour la mise en oeuvre du mécanisme de synchronisation de la figure 4,
- la figure 7 est un exemple simplifié d'exécution du procédé de régulation de la figure 3, avec la mise en oeuvre d'un mécanisme de synchronisation selon un deuxième mode de réalisation de l'invention, et
- les figures 8 et 9 illustrent schématiquement les fonctionnements de liens et de sources du dispositif de traitement de données de la figure 1 pour la mise en oeuvre du mécanisme de synchronisation de la figure 7.

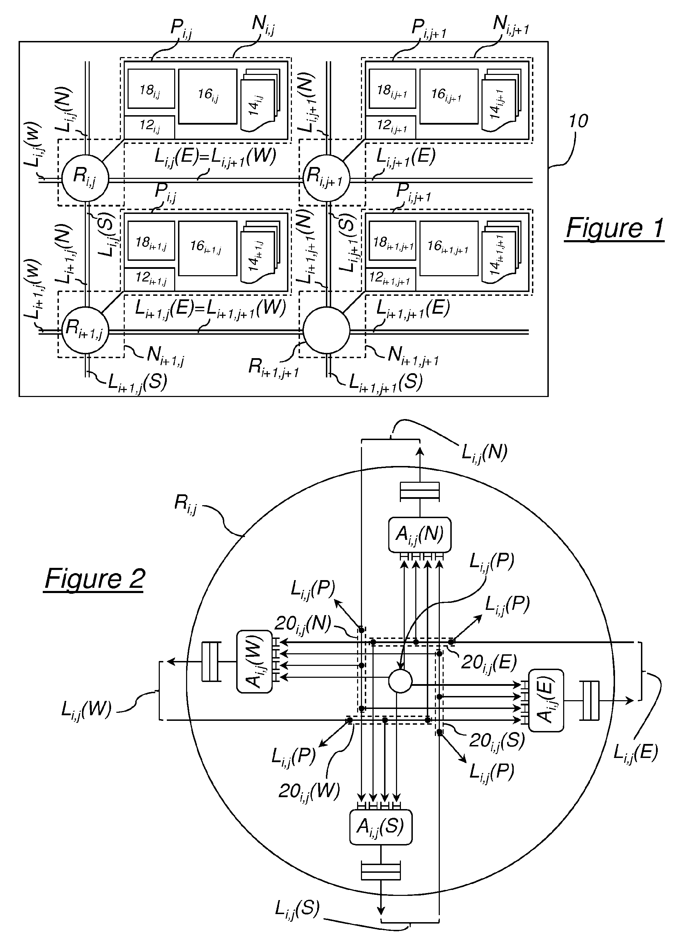

Le dispositif 10 de traitement de données illustré sur la figure 1 comporte un réseau sur puce partiellement représenté. Ce réseau sur puce, réalisé sous la forme d'un circuit intégré, est constitué d'une pluralité de noeuds disposés en matrice et interconnectés entre eux par des liens bidirectionnels orientés dans quatre directions matricielles Nord (N), Sud (S), Ouest (W) et Est (E). Les liens permettent la transmission de paquets de données d'un noeud à l'autre.

Dans l'exemple de la figure 1, seuls quatre noeuds sont représentés de façon non limitative et notés $N_{i,j}$, $N_{i,j+1}$, $N_{i+1,j}$ et $N_{i+1,j+1}$. Quatre liens bidirectionnels $L_{i,j}(N)$, $L_{i,j}(S)$, $L_{i,j}(W)$ et $L_{i,j}(E)$ partent du noeud $N_{i,j}$ dans les quatre directions précitées. Quatre liens bidirectionnels $L_{i,j+1}(N)$, $L_{i,j+1}(S)$, $L_{i,j+1}(W)$ et $L_{i,j+1}(E)$ partent du noeud $N_{i,j+1}$ dans les quatre directions précitées. Quatre liens bidirectionnels $L_{i+1,j}(N)$, $L_{i+1,j}(S)$, $L_{i+1,j}(W)$ et $L_{i+1,j}(E)$ partent du noeud $N_{i+1,j}$ dans les quatre directions précitées. Enfin, quatre liens bidirectionnels $L_{i+1,j+1}(N)$, $L_{i+1,j+1}(S)$, $L_{i+1,j+1}(W)$ et $L_{i+1,j+1}(E)$ partent du noeud $N_{i+1,j+1}$ dans les quatre directions précitées. On notera que le lien bidirectionnel $L_{i,j}(E)$ correspond au lien bidirectionnel $L_{i,j+1}(W)$, que le lien bidirectionnel $L_{i+1,j}(E)$ correspond au lien bidirectionnel $L_{i+1,j+1}(W)$, que le lien bidirectionnel $L_{i,j}(S)$ correspond au lien bidirectionnel $L_{i+1,j}(N)$ et que le lien bidirectionnel $L_{i,j+1}(S)$ correspond au lien bidirectionnel $L_{i+1,j+1}(N)$.

Le noeud $N_{i,j}$ comporte plus précisément un processeur $P_{i,j}$ et un routeur $R_{i,j}$. La fonction du routeur $R_{i,j}$, est d'orienter chaque paquet de données qu'il reçoit du processeur $P_{i,j}$ ou de l'une des quatre directions précitées vers le processeur $P_{i,j}$ ou l'une des quatre directions précitées, sachant que l'entrée doit être différente de la sortie pour que le transfert des données ait un sens. De façon bien connue, le processeur $P_{i,j}$ comporte une interface réseau $12_{i,j}$, apte à communiquer avec le routeur $R_{i,j}$, des éléments de traitement $14_{i,j}$, aptes à réaliser des opérations programmées de traitement de données, et une mémoire locale $16_{i,j}$, par exemple configurée en mémoire cache à un ou plusieurs niveaux. Il comporte en outre un calculateur $18_{i,j}$, de régulation dynamique de débits de consigne, par exemple intégré fonctionnellement dans un module de contrôle de communication.

De même, le noeud $N_{i,j+1}$ comporte un processeur $P_{i,j+1}$ et un routeur $R_{i,j+1}$, le processeur $P_{i,j+1}$ comportant une interface réseau $12_{i,j+1}$, des éléments de traitement $14_{i,j+1}$, une mémoire locale $16_{i,j+1}$ et un calculateur $18_{i,j+1}$ de régulation dynamique de débits de consigne ; le noeud $N_{i+1,j}$ comporte un processeur $P_{i+1,j}$ et un routeur $R_{i+1,j}$, le processeur $P_{i+1,j}$ comportant une interface réseau $12_{i+1,j}$, des éléments de traitement $14_{i+1,j}$, une mémoire locale $16_{i+i,j}$ et un calculateur $18_{i+1,j}$ de régulation dynamique de débits de consigne ; le noeud $N_{i+1,j+1}$ comporte un processeur $P_{i+1,j+1}$ et un routeur $R_{i+1,j+1}$, le processeur $P_{i+1,j+1}$ comportant une interface réseau $12_{i+1,j+1}$, des éléments de traitement $14_{i+1,j+1}$, une mémoire locale $16_{i+i,j+1}$ et un calculateur $18_{i+1,j+1}$ de régulation dynamique de débits de consigne.

Parmi les noeuds du réseau sur puce, pour une configuration de routage et une activité données, certains sont des sources émettrices de paquets de données, d'autres sont des cibles réceptrices de ces paquets de données et tous remplissent potentiellement une fonction de routage de paquets de données lorsqu'ils se trouvent sur leur trajet parcouru dans le réseau sur puce, c'est-à-dire lorsqu'ils se trouvent dans un canal de transmission point à point.

Pour chaque canal de transmission point à point, c'est-à-dire pour chaque source de données, un débit de consigne doit être calculé et mis à jour pour être ensuite appliqué par un limiteur de trafic. Ce calcul est réalisé par les calculateurs $18_{i,j}$ de régulation dynamique de débits de consigne définis précédemment, de la façon suivante :

- pour chaque source émettrice de paquets de données, matérialisée par l'un des éléments de traitement $14_{i,j}$, définir une valeur initiale de son débit de consigne, celle-ci pouvant être prédéfinie en mémoire et/ou nulle,
- pour chaque lien du réseau sur puce sollicité par la transmission de paquets de données, estimer une marge de débit disponible à répartir entre les sources actives non saturées dont le canal de transmission inclut ce lien,
- pour chaque source émettrice de paquets de données, calculer une mise à jour de son débit de consigne en fonction des marges de débits disponibles estimées pour les liens de son canal de transmission, et
- répéter les deux étapes précédentes tant que les sources actives ne sont pas toutes saturées.

Comme indiqué précédemment, une source active saturée est une source qui a des paquets de données à émettre selon un débit de consigne imposé par le limiteur de trafic et dont au moins un lien sur son canal de transmission est saturé. Un lien saturé est avantageusement défini comme étant un lien qui n'a plus de marge de débit disponible.

En ce qui concerne les calculs effectués pour les sources, ils peuvent être faits par les calculateurs $18_{i,j}$ de régulation dynamique de débits de consigne situés dans les mêmes noeuds $N_{i,j}$ que ces sources.

En ce qui concerne les calculs effectués pour les liens, ils peuvent être faits par les calculateurs $18_{i,j}$ de régulation dynamique de débits de consigne situés en amont ou en aval de ces liens dans les canaux de transmission concernés.

Pour mieux comprendre les calculs qui peuvent être faits au niveau de chaque lien, il convient de détailler la structure possible de chaque routeur $R_{i,j}$ du réseau du puce. Un exemple non limitatif d'une telle structure est illustré sur la figure 2.

Chaque lien bidirectionnel $L_{i,j}(N)$, $L_{i,j}(S)$, $L_{i,j}(W)$, $L_{i,j}(E)$ vers un autre noeud du réseau est illustré avec un double flux entrant et sortant. Un lien supplémentaire $L_{i,j}(P)$ illustré sur cette figure représente le double flux entrant de et sortant vers le processeur $P_{i,j}$. Chaque paquet de données entrant par un lien ou provenant du processeur $P_{i,j}$ est orienté vers un module d'arbitrage de l'un des quatre autres liens par un module de resynchronisation et redirection. Par ailleurs, chaque module d'arbitrage est précédé d'une mémoire tampon pour chaque flux arrivant et suivi d'une mémoire tampon de sortie. Ainsi, tout paquet de données arrivant par le lien $L_{i,j}(N)$ est orienté par un module de resynchronisation et redirection $20_{i,j}(N)$ vers l'un des quatre autres liens $L_{i,j}(S)$, $L_{i,j}(W)$, $L_{i,j}(E)$ ou $L_{i,j}(P)$ en fonction du canal de transmission qu'il doit suivre, c'est à dire vers une mémoire tampon d'entrée du module d'arbitrage correspondant $A_{i,j}(S)$, $A_{i,j}(W)$, $A_{i,j}(E)$ ou $A_{i,j}(P)$ (ce dernier n'étant pas illustré sur la figure 2 par souci de clarté du dessin). Tout paquet de données arrivant par le lien $L_{i,j}(S)$ est orienté par un module de resynchronisation et redirection $20_{i,j}(S)$ vers l'un des quatre autres liens $L_{i,j}(N)$, $L_{i,j}(W)$, $L_{i,j}(E)$ ou $L_{i,j}(P)$, c'est à dire vers une mémoire tampon d'entrée du module d'arbitrage correspondant $A_{i,j}(N)$, $A_{i,j}(W)$, $A_{i,j}(E)$ ou $A_{i,j}(P)$. Tout paquet de données arrivant par le lien $L_{i,j}(W)$ est orienté par un module de resynchronisation et redirection $20_{i,j}(W)$ vers l'un des quatre autres liens $L_{i,j}(N)$, $L_{i,j}(S)$, $L_{i,j}(E)$ ou $L_{i,j}(P)$, c'est à dire vers une mémoire tampon d'entrée du module d'arbitrage correspondant $A_{i,j}(N)$, $A_{i,j}(S)$, $A_{i,j}(E)$ ou $A_{i,j}(P)$. Tout paquet de données arrivant par le lien $L_{i,j}(E)$ est orienté par un module de resynchronisation et redirection $20_{i,j}(E)$ vers l'un des quatre autres liens $L_{i,j}(N)$, $L_{i,j}(S)$, $L_{i,j}(W)$ ou $L_{i,j}(P)$, c'est à dire vers une mémoire tampon d'entrée du module d'arbitrage correspondant $A_{i,j}(N)$, $A_{i,j}(S)$, $A_{i,j}(W)$ ou $A_{i,j}(P)$. Enfin, tout paquet de données arrivant par le lien $L_{i,j}(P)$ est orienté par un module de resynchronisation et redirection $20_{i,j}(P)$ (non illustré sur la figure 2 par souci de clarté du dessin) vers l'un des quatre autres liens $L_{i,j}(N)$, $L_{i,j}(S)$, $L_{i,j}(W)$ ou $L_{i,j}(E)$, c'est à dire vers une mémoire tampon d'entrée du module d'arbitrage correspondant $A_{i,j}(N)$, $A_{i,j}(S)$, $A_{i,j}(W)$ ou $A_{i,j}(E)$.

Les modules d'arbitrage $A_{i,j}(N)$, $A_{i,j}(S)$, $A_{i,j}(W)$, $A_{i,j}(E)$ et $A_{i,j}(P)$ fonctionnent par exemple selon le principe bien connu du Round-Robin.

Conformément à cette structure de chaque routeur $R_{i,j}$, on comprend pourquoi chaque lien du réseau sur puce peut être considéré comme l'association d'une connexion physique point à point, entre deux noeuds voisins dans une certaine direction, et d'au moins une mémoire tampon (notamment soit la mémoire tampon de sortie du module d'arbitrage situé dans le noeud d'origine du lien, soit l'une quelconque des mémoires tampons d'entrée des modules d'arbitrage situés dans le noeud de destination du lien).

On comprend donc aussi pourquoi il est avantageux de prendre en considération non seulement la capacité de débit maximal du lien (liée à la capacité de sa connexion physique), mais également sa capacité d'absorption locale maximale de dépassements sporadiques possibles des débits de consigne (liée à la capacité de sa ou ses mémoires tampons), lorsque l'on souhaite estimer la marge de débit disponible de ce lien pour une configuration de routage et des débits de consigne donnés. En effet, il a été montré dans l'article de Cruz précité que pour un débit de consigne donné, les dépassements sporadiques sont plafonnés à une valeur seuil dépendante de ce débit de consigne, de sorte que l'on peut en tenir compte pour établir une marge entre cette valeur seuil et la capacité du lien à absorber les dépassements sporadiques de débits de consigne.

Ainsi, conformément à l'invention, pour chaque lien lnk du réseau sur puce sollicité par la transmission de paquets de données, sa marge de débit disponible à répartir est estimée à partir :

- d'une première marge $rC_{lnk}$ calculée sur la base d'une capacité de débit maximal $C_{lnk}$ du lien, cette première marge résultant par exemple d'une différence entre la somme des débits de consigne des canaux de transmission passant par ce lien et sa capacité de débit maximal, et
- d'une deuxième marge $rd_{lnk}$ calculée sur la base d'une capacité d'absorption locale maximale, par mémoire tampon, de dépassements sporadiques possibles des débits de consigne des canaux de transmission passant par ce lien, cette deuxième marge résultant par exemple d'une différence entre une fonction des débits de consigne des canaux de transmission passant par ce lien et sa capacité d'absorption locale maximale.

En ce qui concerne la première marge $rc_{lnk}$, si l'on note $CC_{lnk}$ l'ensemble des canaux de transmission ch qui incluent le lien lnk, $\rho_{ch}$ les valeurs courantes des débits de consigne de ces canaux de transmission et $\varepsilon$ une constante

de marge résiduelle en dessous de laquelle on considère que la marge de débit disponible à répartir est nulle, alors elle peut être définie de la façon suivante :

$$rc_{lnk} = C_{lnk} - \varepsilon - \sum_{ch \in CC_{lnk}} \rho_{ch} \qquad (1)$$

En ce qui concerne la deuxième marge $rd_{lnk}$, on montre qu'elle peut prendre la forme similaire suivante :

$$rd_{lnk} = BF_{lnk} - \varepsilon - f(\{\rho_{ch}, ch \in CC_{lnk}\}) \qquad (2)$$

Dans cette équation, $BF_{lnk}$ est une valeur de capacité d'absorption locale maximale propre au lien lnk et dépendante de la taille de la mémoire tampon qui lui est associée (dépendante elle-même des mémoires tampons des routeurs comme cela a été vu en référence à la figure 2), mais également dépendante d'autres paramètres du réseau sur puce tels que la longueur maximale des paquets de données transitant dans le réseau et le nombre de flux contributeurs sur le lien lnk.

Dans cette équation également, $f(\{\rho_{ch}, ch \in CC_{lnk}\})$ est l'expression générale d'une fonction à déterminer de l'ensemble des valeurs des débits de consigne des canaux de transmission passant par le lien lnk. Cette expression dépend notamment de la discipline d'arbitrage choisie, de la régulation de débit à la source choisie et d'autres paramètres du réseau sur puce.

On montre en particulier qu'elle prend une forme linéaire lorsque la discipline d'arbitrage choisie est de type « work conserving », c'est-à-dire lorsque l'émission d'une source de trafic éligible reste inactive seulement quand sa file d'entrée est vide. Dans ce cas, l'expression de la deuxième marge $rd_{lnk}$ devient plus simplement :

$$rd_{lnk} = BF_{lnk} - \varepsilon - \sum_{ch \in CC_{lnk}} D_{ch,lnk} \cdot \rho_{ch} \qquad (3)$$

Dans cette équation, chaque valeur $D_{ch,lnk}$ est un coefficient à déterminer résultant lui-même d'une somme de coefficients propres à tous les liens situés en amont du lien lnk dans l'ensemble $CC_{lnk}$.

A titre d'exemple non limitatif, un calcul de $BF_{lnk}$ et des coefficients $D_{ch,lnk}$ va maintenant être détaillé, dans le cas d'une régulation de débit à la source par fenêtre glissante.

Lorsque la discipline d'arbitrage est « work conserving », il est connu que l'inégalité suivante doit être vérifiée :

$$\sum_{ch \in CC_{lnk}} \left( \sigma_{ch} + \sum_{l \in RR_{ch,lnk}} d_{l,ch} \cdot \rho_{ch} \right) \leq QSIZE \qquad (4)$$

Dans cette inégalité, $\sigma_{ch}$ est la valeur seuil de plafonnement des dépassements sporadiques possibles compte tenu du débit de consigne $\rho_{ch}$ du canal de transmission ch, telle qu'enseignée dans l'article de Cruz précité.

Dans cette inégalité également, $RR_{ch,lnk}$ est l'ensemble des liens traversés en amont du lien lnk dans le canal de transmission ch, QSIZE est la taille de la mémoire tampon associée au lien lnk et $d_{l,ch}$ est un coefficient calculé de la façon suivante :

$$d_{l,ch} = (nd_l - 1) \cdot PSIZE \qquad (5)$$

Dans cette équation, $nd_l$ est le nombre de directions contributrices sur la mémoire tampon associée au lien l et PSIZE est la taille maximale des paquets de données exprimée dans la même unité que QSIZE (i.e. flits, bytes ou autres).

Dans le cas particulier d'une régulation de débit à la source par fenêtre glissante, le régulateur respecte le débit de consigne $\rho_{ch}$ sur une fenêtre glissante de longueur Tw en limitant le nombre d'unités de paquets de données (i.e. flits, bytes ou autres) avec un débit instantané maximal d'injection de valeur constante notée DMAX. On montre que l'expression $\Sigma_{ch \in CC_{lnk}} \sigma_{ch}$ de l'inégalité (4) prend alors la forme suivante :

$$\sum_{ch \in CC_{lnk}} \sigma_{ch} = \sum_{ch \in CC_{lnk}} \rho_{ch} \cdot \left(1 - \frac{\rho_{ch}}{DMAX}\right) \cdot Tw \tag{6}$$

Cette expression n'est pas linéaire en $\rho_{ch}$. Néanmoins, en notant $N_{lnk}$ le nombre de sources contributrices au lien lnk, c'est-à-dire le nombre de canaux de transmission passant par le lien lnk, ou autrement dit le nombre d'éléments ch dans l'ensemble $CC_{lnk}$, on peut astucieusement la simplifier en remarquant que la borne supérieure de l'expression (6) est atteinte lorsque $\forall ch$, $\rho_{ch} = \frac{DMAX}{NS_{lnk}}$. On obtient :

$$\underset{\rho_{ch}}{\mathrm{Sup}}\left(\sum_{ch \in CC_{lnk}} \sigma_{ch}\right) = \sum_{ch \in CC_{lnk}} \frac{DMAX}{N_{lnk}} \cdot \left(1 - \frac{\frac{DMAX}{N_{lnk}}}{DMAX}\right) \cdot Tw = \frac{(N_{lnk} - 1)}{N_{lnk}} \cdot DMAX \cdot Tw \tag{7}$$

L'inégalité (4) peut ainsi être avantageusement remplacée par une inégalité plus contraignante mais linéaire en $\rho_{ch}$ :

$$\sum_{ch \in CC_{lnk}} \sum_{l \in RR_{ch,lnk}} d_{l,ch} \cdot \rho_{ch} \leq QSIZE - \frac{(N_{lnk} - 1)}{N_{lnk}} \cdot DMAX \cdot Tw \tag{8}$$

En notant :

$$BF_{lnk} = QSIZE - \frac{(N_{lnk} - 1)}{N_{lnk}} \cdot DMAX \cdot Tw \quad (9) \quad \text{et} \quad D_{ch,lnk} = \sum_{l \in RR_{ch,lnk}} d_{l,ch} , \tag{10}$$

on obtient l'inégalité :

$$\sum_{ch \in CC_{lnk}} D_{ch,lnk} \cdot \rho_{ch} \leq BF_{lnk} , \tag{11}$$

à partir de laquelle on construit l'expression (3).

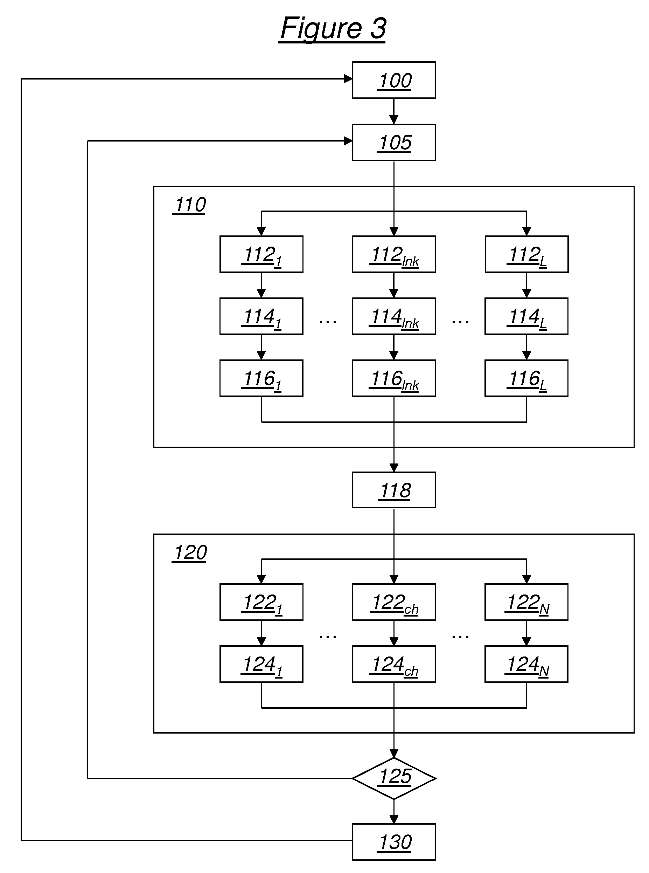

Le fonctionnement du dispositif 10 de traitement de données pour la régulation dynamique des débits de consigne va maintenant être détaillé en référence à la figure 3 et dans l'exemple particulier détaillé ci-dessus où les équations (1) et (3) sont applicables.

Au cours d'une première étape 100 d'initialisation, un compteur d'itérations i est initialisé à 0. Toutes les sources inactives, c'est-à-dire n'ayant aucun paquet de données à transmettre, sont déclarées saturées. Toutes les sources actives sont déclarées non saturées et leurs débits de consigne sont initialisés à des valeurs notées $\rho_{ch,0}$. Ces valeurs initiales sont par exemple nulles, ou choisies non nulles mais de manière à respecter les contraintes de capacité en débit des liens sollicités (ces contraintes seront appelées « contraintes de capacité » par la suite) et les contraintes de capacité en absorption de dépassements sporadiques de débits de consignes dans les liens sollicités (ces contraintes seront appelées « contraintes de distorsion » par la suite). On note N le nombre de sources actives. Ce nombre N est donc également le nombre de canaux de transmission et de débits de consigne, l'indice ch qui désigne un canal de transmission variant ainsi de 1 à N. On note L le nombre de liens sollicités par ces N sources actives. L est donc le nombre de liens inclus dans les N canaux de transmission, l'indice lnk qui désigne un lien de cet ensemble de liens variant ainsi de 1 à L.

L'étape d'initialisation 100 est suivie d'une étape 105 d'incrémentation du compteur d'itération i d'une unité.

Au cours d'une étape 110 suivante exécutée à l'itération i, pour chaque lien lnk, $1 \leq lnk \leq L$, du réseau sur puce sollicité par la transmission de paquets de données, une marge de débit disponible, à répartir entre les sources actives non saturées dont le canal de transmission inclut ce lien, est estimée. Plus précisément, c'est une marge de débit disponible pour chacune de ces sources, identique pour toutes les sources concernées et notée $\Delta_{lnk,i}$, qui est estimée.

L'exécution de l'étape 110 est répartie sur les L liens sollicités par les N sources actives. Elle se décompose en L étapes parallèles $112_1$, ..., $112_{lnk}$, ..., $112_L$ de calcul des marges $rc_{lnk}$ définies dans l'équation (1), suivies de L étapes parallèles $114_1$, ..., $114_{lnk}$, ..., $114_L$ de calcul des marges $rd_{lnk}$ définies dans l'équation (3), suivies de L étapes parallèles $116_1$, ..., $116_{lnk}$, ..., $116_L$ de calcul des marges de débits disponibles pour chacune des sources actives non saturées.

Plus précisément, à l'itération i, chaque marge $rc_{lnk}$ est notée $rc_{lnk,i}$ et dépend des dernières valeurs de débits de consigne déterminées à l'itération i-1 et notées $\rho_{ch,i-1}$. Il en résulte que l'équation (1) devient :

$$rc_{lnk,i} = C_{lnk} - \varepsilon - \sum_{ch \in CC_{lnk}} \rho_{ch,i-1} \qquad (12)$$

C'est donc ce calcul défini par l'équation (12) qui est effectué aux étapes $112_1$, ..., $112_{lnk}$, ..., $112_L$. On note en particulier que la capacité de débit maximal $C_{lnk}$ du lien lnk est une constante prédéterminée pour ce lien qui ne dépend pas de l'itération i. De même, l'ensemble $CC_{lnk}$ des canaux de transmission qui incluent le lien lnk ne dépend pas non plus de l'itération i.

Plus précisément également, à l'itération i, la marge $rd_{lnk}$ est notée $rd_{lnk,i}$ et dépend des dernières valeurs de débits de consigne déterminées à l'itération i-1 et notées $\rho_{ch,i-1}$. Il en résulte que l'équation (3) devient :

$$rd_{lnk,i} = BF_{lnk} - \varepsilon - \sum_{ch \in CC_{lnk}} D_{ch,lnk} \cdot \rho_{ch,i-1} \qquad (13)$$

C'est donc ce calcul défini par l'équation (13) qui est effectué aux étapes $114_1$, ..., $114_{lnk}$, ..., $114_L$. On note en particulier que la capacité $BF_{lnk}$ d'absorption locale maximale des dépassements sporadiques possibles des débits de consigne et les coefficients $D_{ch,lnk}$ du lien lnk sont des constantes prédéterminées pour ce lien qui ne dépendent pas de l'itération i.

Au cours des étapes suivantes $116_1$, ..., $116_{lnk}$, ..., $116_L$, les marges de débits disponibles $\Delta_{lnk,i}$ sont estimées à partir des valeurs $rc_{lnk,i}$ et $rd_{lnk,i}$ calculées aux étapes $112_1$, ..., $112_{lnk}$, ..., $112_L$ et $114_1$, ..., $114_{lnk}$, ..., $114_L$. A titre d'exemple non limitatif, chaque marge de débit disponible pour chacune des sources actives non saturées contribuant à la charge de l'un quelconque des liens lnk peut être calculée à l'étape $116_{lnk}$ de la façon suivante :

$$\Delta_{lnk,i} = \mathrm{Min}\left(\Delta c_{lnk,i}, \Delta d_{lnk,i}\right) \qquad (14)$$

avec :

$$\Delta c_{lnk,i} = \frac{rc_{lnk,i}}{NS_{lnk,i}} \qquad (15)$$

et :

$$\Delta d_{lnk,i} = \frac{rd_{lnk,i}}{\sum_{ch \in CCNS_{lnk,i}} D_{ch,lnk}} \qquad (16)$$

Dans l'équation (15), $NS_{lnk,i}$ est le nombre de sources actives non saturées contribuant au lien lnk à l'itération i. Ce nombre est mis à jour, par exemple à chaque étape $116_{lnk}$ ou avant, sur la base d'un retour d'information de chaque source active indiquant aux liens vers lesquels elle envoie des paquets de données lorsqu'elle devient saturée. L'équation (15) représente donc une répartition équitable de la marge $rc_{lnk,i}$ du lien lnk entre ses sources actives non saturées.

Dans l'équation (16), $CCNS_{lnk,i}$ est l'ensemble des canaux de transmission incluant le lien lnk dont les sources sont actives et non saturées. Cet ensemble est également mis à jour, par exemple à chaque étape $116_{lnk}$ ou avant, sur la même base que le nombre $NS_{lnk,i}$. L'équation (16) représente donc une répartition équitable de la marge $rd_{lnk,i}$ du lien lnk entre ses sources actives non saturées.

Suite aux étapes $116_1$, ..., $116_{lnk}$, ..., $116_L$, les valeurs de marges $\Delta_{lnk,i}$ sont transmises à toutes les sources concernées (étape 118).

Au cours d'une étape 120 suivante exécutée également à l'itération i, pour chaque canal de transmission du réseau sur puce dont la source est active et non saturée (i.e. au plus $1 \leq ch \leq N$ à la première itération, le nombre de ces canaux de transmission étant susceptible de diminuer à chaque itération), une mise à jour du débit de consigne correspondant est effectuée. Cette mise à jour est exécutée par la source concernée.

L'exécution de l'étape 120 est réalisée pour les sources actives non saturées à l'itération i, c'est-à-dire pour au plus les N sources actives. Elle se décompose en au plus N étapes parallèles $122_1$, ..., $122_{ch}$, ..., $122_N$ de récupération des valeurs des marges $\Delta_{lnk,i}$ calculées aux étapes $116_1$, ..., $116_{lnk}$, ..., $116_L$, suivies d'au plus N étapes parallèles $124_1$, ..., $124_{ch}$, ..., $124_N$ de calcul des nouveaux débits de consigne des sources actives non encore saturées.

Plus précisément, à chaque étape $122_{ch}$ exécutée pour la source active non saturée du canal de transmission ch, toutes les valeurs de marges $\Delta_{lnk,i}$ provenant des liens lnk inclus dans le canal de transmission ch sont reçues et une valeur de marge disponible minimale $\Delta_{ch,i}$ est calculée de la façon suivante :

$$\Delta_{ch,i} = \underset{lnk \in ch}{\mathrm{Min}} \left( \Delta_{lnk,i} \right) \tag{17}$$

A cette étape, une source active devient saturée si sa valeur $\Delta_{ch,i}$ est nulle, c'est-à-dire si au moins un lien sur son canal de transmission est saturé (i.e. plus de marge disponible sur ce lien). Cette information de saturation doit être remontée à tous les liens lnk concernés, c'est-à-dire tous les liens du canal de transmission ch de la source active qui devient saturée. En outre, une telle source active saturée ne met plus à jour son débit de consigne qui reste constant et n'attend plus de nouvelles valeurs de marges provenant des liens de son canal de transmission.

Plus précisément également, à chaque étape $124_{ch}$ exécutée pour la source active non saturée du canal de transmission ch, le débit de consigne est mis à jour de la façon suivante :

$$\rho_{ch,i} = \rho_{ch,i-1} + \Delta_{ch,i} \tag{18}$$

On passe ensuite à une étape de test 125 au cours de laquelle la décision suivante est prise :

- s'il reste encore au moins une source active non saturée, le procédé est reporté à l'étape 105 d'incrément du compteur i pour l'exécution d'une nouvelle itération,
- s'il ne reste plus de source active non saturée, le procédé est reporté à une étape finale 130 d'attente de changement de toute configuration de routage.

Aucune action particulière de régulation dynamique des débits de consigne n'est réalisée à l'étape 130. En revanche, dès qu'un changement a lieu sur l'activité de l'une des sources de paquets de données ou plus généralement sur la configuration de routage du réseau sur puce, ce changement est détecté et le procédé est reporté à l'étape 100 pour une nouvelle régulation dynamique des débits de consigne correspondants.

Le procédé itératif décrit précédemment est donc conçu pour saturer progressivement toutes les sources actives. Mais il est en outre conçu pour que les contraintes de capacité et de distorsion dans ces liens ne soient jamais enfreintes. Cela se montre par récurrence.

Supposons ainsi que la contrainte de capacité de l'un quelconque des liens lnk soit vérifiée à l'itération i-1. Cela se traduit par l'inégalité suivante :

$$\sum_{ch \in CC_{lnk}} \rho_{ch,i-1} \leq C_{lnk} \tag{19}$$

Si l'on note $RR_{lnk}$ l'ensemble des liens appartenant aux canaux de transmission auxquels appartient également le lien lnk, compte tenu également de l'hypothèse de récurrence (19) et en supposant que tous les liens de cet ensemble ont la même capacité de débit maximal $C_{lnk}$, le procédé itératif décrit précédemment impose l'inégalité suivante pour tout canal de transmission ch incluant le lien lnk :

$$\rho_{ch,i} \leq \rho_{ch,i-1} + \underset{l \in RR_{lnk}}{\mathrm{Min}} \frac{C_{lnk} - \sum_{c \in CC_l} \rho_{c,i-1}}{NS_{lnk,i-1}} \tag{20}$$

En notant $CCS_{lnk,i-1}$ l'ensemble des canaux de transmission incluant le lien lnk dont les sources sont actives et saturées à l'itération i-1 (CCNS$_{lnk,i-1}$ étant l'ensemble déjà défini des canaux de transmission incluant le lien lnk dont les sources sont actives et non saturées à l'itération i-1), et en remarquant que les débits de consigne des sources saturées ne changent pas, il en résulte :

$$\sum_{ch \in CC_{lnk}} \rho_{ch,i} = \sum_{ch \in CCS_{lnk,i-1}} \rho_{ch,i-1} + \sum_{ch \in CCNS_{lnk,i-1}} \rho_{ch,i} \tag{21}$$

Par ailleurs, en sommant l'inégalité (20) sur tous les canaux de transmission dont les sources sont actives et non saturées à l'itération i-1, on obtient l'inégalité suivante :

$$\sum_{ch \in CCNS_{lnk,i-1}} \rho_{ch,i} \leq \sum_{ch \in CCNS_{lnk,i-1}} \rho_{ch,i-1} + \sum_{ch \in CCNS_{lnk,i-1}} \underset{l \in RR_{lnk}}{\mathrm{Min}} \frac{C_{lnk} - \sum_{c \in CC_l} \rho_{c,i-1}}{NS_{lnk,i-1}} \tag{22}$$

L'inégalité (22) peut aussi s'écrire de la façon suivante :

$$\sum_{ch \in CCNS_{lnk,i-1}} \rho_{ch,i} \leq \sum_{ch \in CCNS_{lnk,i-1}} \rho_{ch,i-1} + \sum_{ch \in CCNS_{lnk,i-1}} \frac{C_{lnk}}{NS_{lnk,i-1}} \\ - \sum_{ch \in CCNS_{lnk,i-1}} \underset{l \in RR_{lnk}}{\mathrm{Max}} \frac{\sum_{c \in CC_l} \rho_{c,i-1}}{NS_{lnk,i-1}} \tag{23}$$

En remarquant que NS$_{lnk,i-1}$ = Card(CCNS$_{lnk,i-1}$), où Card est la fonction cardinale indiquant le nombre d'éléments d'un ensemble, l'inégalité (23) se simplifie en :

$$\sum_{ch \in CCNS_{lnk,i-1}} \rho_{ch,i} \leq \sum_{ch \in CCNS_{lnk,i-1}} \rho_{ch,i-1} + C_{lnk} - \underset{l \in RR_{lnk}}{\mathrm{Max}} \left( \sum_{c \in CC_l} \rho_{c,i-1} \right) \tag{24}$$

En combinant l'équation (21) et l'inégalité (24), on obtient :

$$\sum_{ch \in CC_{lnk}} \rho_{ch,i} \leq \sum_{ch \in CCS_{lnk,i-1}} \rho_{ch,i-1} + \sum_{ch \in CCNS_{lnk,i-1}} \rho_{ch,i-1} + C_{lnk} - \underset{l \in RR_{lnk}}{\mathrm{Max}} \left( \sum_{c \in CC_l} \rho_{c,i-1} \right) \tag{25}$$

L'inégalité (25) peut aussi s'écrire de la façon suivante :

$$\sum_{ch \in CC_{lnk}} \rho_{ch,i} \leq \left[ \sum_{ch \in CC_{lnk}} \rho_{ch,i-1} - \underset{l \in RR_{lnk}}{\mathrm{Max}} \left( \sum_{c \in CC_l} \rho_{c,i-1} \right) \right] + C_{lnk} \tag{26}$$

D'où il vient :

$$\sum_{ch \in CC_{lnk}} \rho_{ch,i} \leq C_{lnk} \tag{27}$$

Cela signifie que lorsque la contrainte de capacité de l'un quelconque des liens lnk est vérifiée à l'itération i-1, alors elle est également vérifiée à l'itération i. Par récurrence, cette contrainte de capacité est donc respectée à toutes les itérations à partir du moment où les conditions initiales de l'étape 100 la vérifient.

De manière similaire, on montre par récurrence que la contrainte de distorsion dans l'un quelconque des liens

lnk n'est jamais enfreinte.

Supposons ainsi que la contrainte de distorsion dans l'un quelconque des liens lnk soit vérifiée à l'itération i-1. Cela se traduit par l'inégalité suivante :

$$\sum_{ch \in CC_{lnk}} D_{ch,lnk} \cdot \rho_{ch,i-1} \leq BF_{lnk} \tag{28}$$

Compte tenu de l'hypothèse de récurrence (28), le procédé itératif décrit précédemment impose l'inégalité suivante pour tout canal de transmission ch incluant le lien lnk :

$$\rho_{ch,i} \leq \rho_{ch,i-1} + \underset{l \in RR_{lnk}}{\text{Min}} \frac{BF_l - \sum_{c \in CC_l} D_{c,l} \cdot \rho_{c,i-1}}{\sum_{ch \in CCNS_{l,i-1}} D_{ch,l}} \tag{29}$$

En remarquant que les débits de consigne des sources saturées ne changent pas, il en résulte :

$$\sum_{ch \in CC_{lnk}} D_{ch,lnk} \cdot \rho_{ch,i} = \sum_{ch \in CCS_{lnk,i-1}} D_{ch,lnk} \cdot \rho_{ch,i-1} + \sum_{ch \in CCNS_{lnk,i-1}} D_{ch,lnk} \cdot \rho_{ch,i} \tag{30}$$

Par ailleurs, en sommant l'inégalité (29) sur tous les canaux de transmission dont les sources sont actives et non saturées à l'itération i-1, et en pondérant avec les coefficients, $D_{ch,lnk}$, on obtient l'inégalité suivante :

$$\sum_{ch \in CCNS_{lnk,i-1}} D_{ch,lnk} \cdot \rho_{ch,i} \leq \sum_{ch \in CCNS_{lnk,i-1}} D_{ch,lnk} \cdot \rho_{ch,i-1}$$
$$+ \sum_{ch \in CCNS_{lnk,i-1}} D_{ch,lnk} \cdot \underset{l \in RR_{lnk}}{\text{Min}} \frac{BF_l - \sum_{c \in CC_l} D_{c,l} \cdot \rho_{c,i-1}}{\sum_{ch \in CCNS_{l,i-1}} D_{ch,l}} \tag{31}$$

En combinant l'équation (30) et l'inégalité (31), on obtient :

$$\sum_{ch \in CC_{lnk}} D_{ch,lnk} \cdot \rho_{ch,i} \leq \sum_{ch \in CCS_{lnk,i-1}} D_{ch,lnk} \cdot \rho_{ch,i-1} + \sum_{ch \in CCNS_{lnk,i-1}} D_{ch,lnk} \cdot \rho_{ch,i-1}$$
$$+ \sum_{ch \in CCNS_{lnk,i-1}} D_{ch,lnk} \cdot \underset{l \in RR_{lnk}}{\text{Min}} \frac{BF_l - \sum_{c \in CC_l} D_{c,l} \cdot \rho_{c,i-1}}{\sum_{ch \in CCNS_{l,i-1}} D_{ch,l}} \tag{32}$$

En particulier, le fait que le lien lnk appartienne à tous les canaux de transmission de l'ensemble $RR_{lnk}$ permet de simplifier l'inégalité (32) :

$$\sum_{ch \in CC_{lnk}} D_{ch,lnk} \cdot \rho_{ch,i} \leq \sum_{ch \in CCS_{lnk,i-1}} D_{ch,lnk} \cdot \rho_{ch,i-1} + \sum_{ch \in CCNS_{lnk,i-1}} D_{ch,lnk} \cdot \rho_{ch,i-1}$$
$$+ \sum_{ch \in CCNS_{lnk,i-1}} D_{ch,lnk} \cdot \frac{BF_{lnk} - \sum_{c \in CC_{lnk}} D_{c,lnk} \cdot \rho_{c,i-1}}{\sum_{ch \in CCNS_{lnk,i-1}} D_{ch,lnk}} \tag{33}$$

Ce qui se simplifie à son tour en :

$$\sum_{ch \in CC_{lnk}} D_{ch,lnk} \cdot \rho_{ch,i} \leq \sum_{ch \in CC_{lnk}} D_{ch,lnk} \cdot \rho_{ch,i-1} + BF_{lnk} - \sum_{ch \in CC_{lnk}} D_{ch,lnk} \cdot \rho_{ch,i-1} \tag{34}$$

D'où il vient :

$$\sum_{ch \in CC_{lnk}} D_{ch,lnk} \cdot \rho_{ch,i} \leq BF_{lnk} \qquad (35)$$

Cela signifie que lorsque la contrainte de distorsion de l'un quelconque des liens lnk est vérifiée à l'itération i-1, alors elle est également vérifiée à l'itération i. Par récurrence, cette contrainte est donc respectée à toutes les itérations à partir du moment où les conditions initiales de l'étape 100 la vérifient.

Il convient maintenant de souligner que les contraintes de capacité et de distorsion sont effectivement respectées à toutes les itérations du procédé de la figure 3 à condition que, pour tout i≥1 :

- toutes les mises à jour de débits de consigne de l'itération i-1 soient effectivement calculées (à l'étape 100 pour la première itération du procédé, ou aux étapes $124_1$, ..., $124_{ch}$, ..., $124_N$ de l'itération i-1 pour les itérations suivantes) lorsque l'étape 110 de l'itération i doit être exécutée, et
- toutes les valeurs de marges $\Delta_{lnk,i}$ de l'itération i soient effectivement connues lorsque l'étape 120 de l'itération i doit être exécutée.

En pratique, un mécanisme de synchronisation doit être mis en oeuvre pour assurer ces deux conditions.

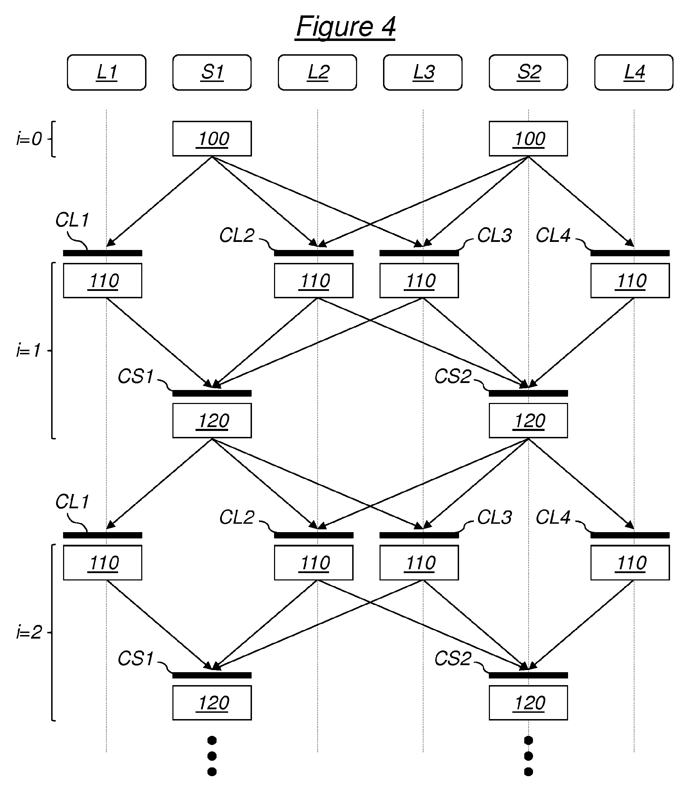

Selon un premier mode de réalisation illustré sur la figure 4, le mécanisme de synchronisation peut être assuré par des barrières de synchronisation réalisées à l'aide de décompteurs de messages. Un exemple simple à deux sources S1, S2 et quatre liens L1, L2, L3, L4 partagés entre ces deux sources est plus précisément illustré par la figure 4. Dans cet exemple simple, un premier canal de transmission, associé à la source S1, comporte les liens L1, L2, L3 parcourus par exemple dans cet ordre et un deuxième canal de transmission, associé à la source S2, comporte les liens L2, L3, L4 parcourus par exemple dans cet ordre. Le mécanisme de synchronisation qui va maintenant être décrit pour cet exemple simple est bien évidemment très facilement généralisable à toute configuration de routage.

Au cours de l'étape 100 (i=0), les débits de consigne des sources S1 et S2 sont initialisés. La valeur initialisée $\rho_{1,0}$ du débit de consigne de la source S1 doit être transmise aux liens L1, L2 et L3. La valeur initialisée $\rho_{2,0}$ du débit de consigne de la source S2 doit être transmise aux liens L2, L3 et L4.

Au niveau de chaque lien lnk, un décompteur de message est défini. Sa valeur est initialisée au nombre $NS_{lnk,0}$ de sources actives non saturées dont les canaux de transmission incluent ce lien lnk. Avant exécution de la première itération (i=1), aucune source active n'est saturée. $NS_{lnk,0}$ correspond donc au nombre total de sources actives dont les canaux de transmission incluent le lien lnk. Dans l'exemple illustré, le décompteur de messages CL1 du lien L1 est ainsi initialisé à la valeur $NS_{L1,0}=1$ (seule la source S1 utilise le lien L1), le décompteur de messages CL2 du lien L2 est initialisé à la valeur $NS_{L2,0}=2$ (les sources S1 et S2 utilisent le lien L2), le décompteur de messages CL3 du lien L3 est initialisé à la valeur $NS_{L3,0}=2$ (les sources S1 et S2 utilisent le lien L3) et le décompteur de messages CL4 du lien L4 est initialisé à la valeur $NS_{L4,0}=1$ (seule la source S2 utilise le lien L4). Chaque fois qu'un lien reçoit un débit de consigne attendu de l'une de ses sources actives non saturées, il décrémente son décompteur de messages d'une unité. Lorsque le décompteur de message atteint la valeur nulle, le lien correspondant peut commencer l'exécution de l'étape 110 de l'itération i=1. Ainsi, le lien L1 procède à l'exécution de l'étape 110 de l'itération i=1 lorsque son décompteur de messages CL1 initialement à la valeur $NS_{L1,0}$ atteint la valeur nulle, le lien L2 procède à l'exécution de l'étape 110 de l'itération i=1 lorsque son décompteur de messages CL2 initialement à la valeur $NS_{L2,0}$ atteint la valeur nulle, le lien L3 procède à l'exécution de l'étape 110 de l'itération i=1 lorsque son décompteur de messages CL3 initialement à la valeur $NS_{L3,0}$ atteint la valeur nulle et le lien L4 procède à l'exécution de l'étape 110 de l'itération i=1 lorsque son décompteur de messages CL4 initialement à la valeur $NS_{L4,0}$ atteint la valeur nulle. Par ailleurs, chaque fois qu'un lien reçoit un débit de consigne attendu de l'une de ses sources actives, celle-ci lui indique si ce débit de consigne la rend saturée. Dans ce cas, à l'itération i=1 la valeur $NS_{lnk,1}$ initialisée à $NS_{lnk,0}$ est décrémentée d'une unité chaque fois qu'une source active indique qu'elle devient saturée, cette source active saturée prévoyant de ne plus envoyer de message aux itérations suivantes.

A l'issue de l'exécution de l'étape 110 de l'itération i=1, chaque lien lnk doit transmettre sa valeur de marge $\Delta_{lnk,1}$ à toutes ses sources actives non saturées.

Au niveau de chaque source, un décompteur de message est également défini. Sa valeur est initialisée au nombre de liens dans son canal de transmission. Dans l'exemple illustré, le décompteur de messages CS1 de la source S1 est ainsi initialisé à la valeur 3 (trois liens L1, L2 et L3) et le décompteur de messages CS2 de la source S2 est initialisé à la valeur 3 (trois liens L2, L3 et L4). Chaque fois qu'une source reçoit une valeur de marge $\Delta_{lnk,1}$ de l'un des liens de son canal de transmission, elle décrémente son décompteur de messages d'une unité. Lorsque le décompteur de message atteint la valeur nulle, la source correspondante peut commencer l'exécution de l'étape 120 de l'itération i=1. Ainsi, la source S1 procède à l'exécution de l'étape 120 de l'itération i=1 lorsque son décompteur de messages CS1 initialement à la valeur 3 atteint la valeur nulle et la source S2 procède à l'exécution de l'étape 120 de l'itération i=1 lorsque son décompteur de messages CS2 initialement à la valeur 3 atteint la valeur nulle.

A l'issue de l'exécution de l'étape 120 de l'itération i=1, chaque source doit transmettre sa nouvelle valeur de débit de consigne à tous les liens de son canal de transmission et leur indiquer si elle est saturée, pour l'exécution éventuelle d'une nouvelle itération (i=2) s'il reste au moins une source active non saturée. Ainsi, la valeur mise à jour $\rho_{1,1}$ du débit de consigne de la source S1 doit être transmise aux liens L1, L2 et L3. La valeur mise à jour $\rho_{2,1}$ du débit de consigne de la source S2 doit être transmise aux liens L1, L2 et L3.

La deuxième itération i=2 est illustrée dans l'exemple de la figure 4. Conformément à cette deuxième itération, le décompteur de message de chaque lien lnk est initialisé à la valeur $NS_{lnk,1}$ calculée à l'itération précédente. Chaque fois qu'un lien reçoit un débit de consigne attendu de l'une de ses sources actives non saturées, il décrémente son décompteur de messages d'une unité. Lorsque le décompteur de message atteint la valeur nulle, le lien correspondant peut commencer l'exécution de l'étape 110 de l'itération i=2. Ainsi, le lien L1 procède à l'exécution de l'étape 110 de l'itération i=2 lorsque son décompteur de messages CL1 initialement à la valeur $NS_{L1,1}$ atteint la valeur nulle, le lien L2 procède à l'exécution de l'étape 110 de l'itération i=2 lorsque son décompteur de messages CL2 initialement à la valeur $NS_{L2,i}$ atteint la valeur nulle, le lien L3 procède à l'exécution de l'étape 110 de l'itération i=3 lorsque son décompteur de messages CL3 initialement à la valeur $NS_{L3,1}$ atteint la valeur nulle et le lien L4 procède à l'exécution de l'étape 110 de l'itération i=2 lorsque son décompteur de messages CL4 initialement à la valeur $NS_{L4,1}$ atteint la valeur nulle. Par ailleurs, chaque fois qu'un lien reçoit un débit de consigne attendu de l'une de ses sources actives, celle-ci lui indique si ce débit de consigne la rend saturée. Dans ce cas, à l'itération i=2 la valeur $NS_{lnk,2}$ initialisée à $NS_{lnk,1}$ est décrémentée d'une unité chaque fois qu'une source active indique qu'elle devient saturée, cette source active saturée prévoyant de ne plus envoyer de message aux itérations ultérieures.

A l'issue de l'exécution de l'étape 110 de l'itération i=2, chaque lien lnk doit transmettre sa valeur de marge $\Delta_{lnk,2}$ à toutes ses sources actives non saturées.

Au niveau de chaque source, le décompteur de message est de nouveau initialisé au nombre de liens dans son canal de transmission. Chaque fois qu'une source reçoit une valeur de marge $\Delta_{lnk,2}$ de l'un des liens de son canal de transmission, elle décrémente son décompteur de messages d'une unité. Lorsque le décompteur de message atteint la valeur nulle, la source correspondante peut commencer l'exécution de l'étape 120 de l'itération i=2. Ainsi, la source S1 procède à l'exécution de l'étape 120 de l'itération i=2 lorsque son décompteur de messages CS1 initialement à la valeur 3 atteint la valeur nulle et la source S2 procède à l'exécution de l'étape 120 de l'itération i=2 lorsque son décompteur de messages CS2 initialement à la valeur 3 atteint la valeur nulle.

A l'issue de l'exécution de l'étape 120 de l'itération i=2, chaque source doit transmettre sa nouvelle valeur de débit de consigne à tous les liens de son canal de transmission et leur indiquer si elle est saturée, pour l'exécution éventuelle d'une nouvelle itération (i=3) s'il reste au moins une source active non saturée. Ainsi, la valeur mise à jour $\rho_{1,2}$ du débit de consigne de la source S1 doit être transmise aux liens L1, L2 et L3. La valeur mise à jour $\rho_{2,2}$ du débit de consigne de la source S2 doit être transmise aux liens L1, L2 et L3.

Le procédé itère jusqu'à ce que la condition de fin d'itération de l'étape de test 125 soit vérifiée (i.e. plus de source active non saturée).

Ainsi, à une itération i quelconque, au niveau de chaque lien lnk, le décompteur de message est initialisé à la valeur $NS_{lnk,i-1}$ calculée à l'itération précédente. Chaque fois qu'un lien reçoit un débit de consigne attendu de l'une de ses sources actives non saturées, il décrémente son décompteur de messages d'une unité. Lorsque le décompteur de message atteint la valeur nulle, le lien correspondant peut commencer l'exécution de l'étape 110 de l'itération i. Par ailleurs, chaque fois qu'un lien reçoit un débit de consigne attendu de l'une de ses sources actives, celle-ci lui indique si ce débit de consigne la rend saturée. Dans ce cas, à l'itération i la valeur $NS_{lnk,i}$ initialisée à $NS_{lnk,i-1}$ est décrémentée d'une unité chaque fois qu'une source active indique qu'elle devient saturée, cette source active saturée prévoyant de ne plus envoyer de message aux itérations ultérieures.

A l'issue de l'exécution de l'étape 110 de l'itération i, chaque lien lnk doit transmettre sa valeur de marge $\Delta_{lnk,i}$ à toutes ses sources actives non saturées.

Au niveau de chaque source, le décompteur de message est de nouveau initialisé au nombre de liens dans son canal de transmission. Chaque fois qu'une source active non saturée reçoit une valeur de marge $\Delta_{lnk,i}$ de l'un des liens de son canal de transmission, elle décrémente son décompteur de messages d'une unité. Lorsque le décompteur de message atteint la valeur nulle, la source correspondante peut commencer l'exécution de l'étape 120 de l'itération i. A l'issue de l'exécution de l'étape 120 de l'itération i, chaque source doit transmettre sa nouvelle valeur de débit de consigne à tous les liens de son canal de transmission et leur indiquer si elle est saturée, pour l'exécution éventuelle d'une nouvelle itération s'il reste au moins une source active non saturée.

En ce qui concerne la distribution des étapes précitées et en référence à la figure 1 :

- au niveau de chaque lien, l'exécution de chaque étape 110 pour le calcul de la valeur de marge est réalisée par le calculateur $188_{i,j}$ du module de contrôle de communication du nœud $N_{i,j}$ correspondant à ce lien, alors que la gestion du décompteur de messages est assurée par l'interface réseau $12_{i,j}$,

- au niveau de chaque source, l'exécution de chaque étape 120 pour la mise à jour du débit de consigne est réalisée par le calculateur $18_{i,j}$ du module de contrôle de communication du noeud $N_{i,j}$ correspondant à cette source, alors que la gestion du décompteur de messages est assurée par l'interface réseau $12_{i,j}$.

La gestion des décompteurs de messages peut être réalisée par identification des messages avec un label spécifique au niveau de la couche Transport du modèle OSI (de l'Anglais « Open Systems Interconnection »).

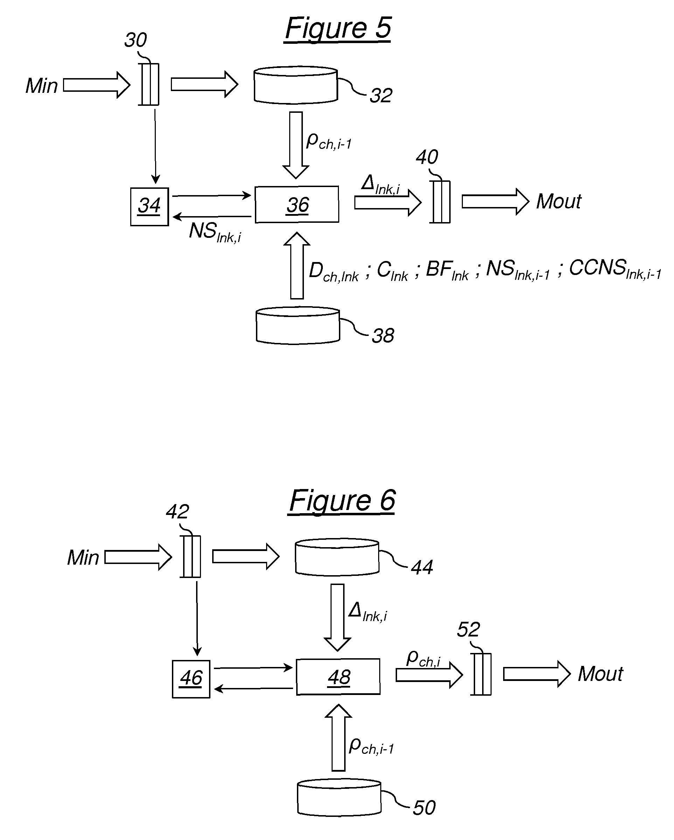

Un exemple d'architecture correspondant au mécanisme de synchronisation de la figure 4 tel que mis en oeuvre dans l'un quelconque des liens lnk est illustré sur la figure 5.

Tout message entrant Min est reçu par une mémoire tampon 30 puis dirigé vers une zone de stockage intermédiaire 32, par exemple prévue dans la mémoire locale $16_{i,j}$ du noeud $N_{i,j}$ correspondant au lien lnk. Cette arrivée de message déclenche une décrémentation de décompteur local 34. Lorsque le décompteur local 34 atteint la valeur nulle, une unité de traitement 36 en est informée. Cette unité de traitement 36 récupère alors tous les messages Min stockés en zone de stockage intermédiaire 32, ceux-ci comportant les débits de consigne $\rho_{ch,i-1}$ et les informations de saturations éventuelles nécessaires aux calculs de l'étape 110 précédemment décrite. Elle récupère également en mémoire 38 les autres valeurs nécessaires au calcul de la marge $\Delta_{lnk,i}$ de débit disponible pour chaque source ch contributrice du lien lnk, à savoir : les coefficients $D_{ch,lnk}$, les capacités $C_{lnk}$, $BF_{lnk}$ et le nombre de sources actives non saturées $NS_{lnk,i-1}$ à mettre à jour ainsi que l'ensemble $CCNS_{lnk,i-1}$. Elle procède enfin aux calculs et fournit en mémoire tampon de sortie 40 un message Mout comportant la valeur de marge $\Delta_{lnk,i}$ adressée à toutes les sources concernées. La fin des calculs provoque la réinitialisation du décompteur 34 à la valeur $NS_{lnk,i}$.

Un exemple d'architecture correspondant au mécanisme de synchronisation de la figure 4 tel que mis en oeuvre dans l'une quelconque des sources ch est illustré sur la figure 6.

Tout message entrant Min est reçu par une mémoire tampon 42 puis dirigé vers une zone de stockage intermédiaire 44, par exemple prévue dans la mémoire locale $16_{i,j}$ du noeud $N_{i,j}$ correspondant à la source ch. Cette arrivée de message déclenche une décrémentation de décompteur local 46. Lorsque le décompteur local 46 atteint la valeur nulle, une unité de traitement 48 en est informée. Cette unité de traitement 48 récupère alors tous les messages Min stockés en zone de stockage intermédiaire 32, ceux-ci comportant les valeurs de marges $\Delta_{lnk,i}$ nécessaires aux calculs de l'étape 120 précédemment décrite. Elle récupère également en mémoire 50 la dernière valeur de débit de consigne $\rho_{ch,i-1}$. Elle procède enfin aux calculs et fournit en mémoire tampon de sortie 52 un message Mout comportant la valeur mise à jour du débit de consigne $\rho_{ch,i}$ adressée à tous les liens du canal de transmission de la source ch. La fin des calculs provoque la réinitialisation du décompteur 46 et l'application du nouveau débit de consigne par le limiteur de trafic concerné.

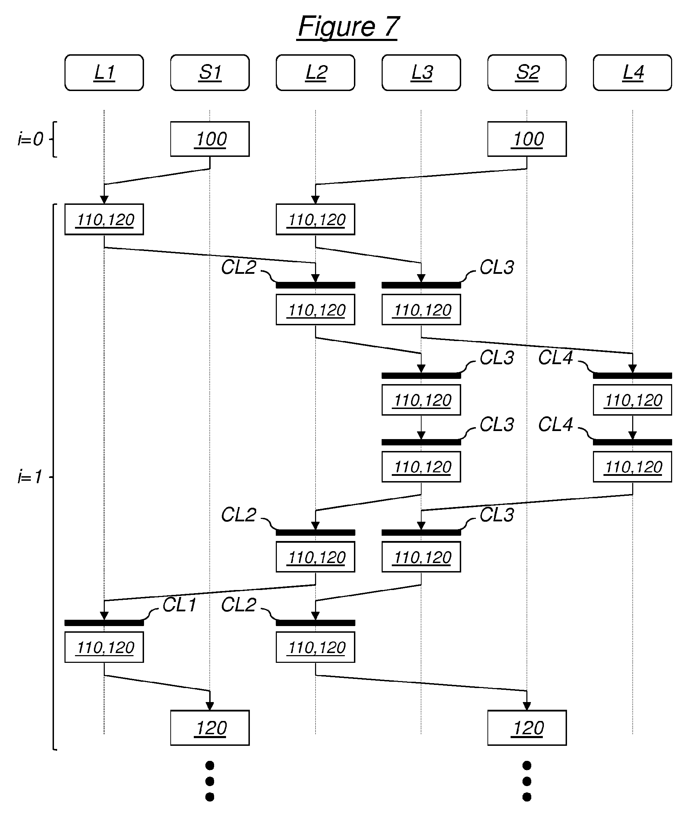

Selon un deuxième mode de réalisation illustré sur la figure 7, le mécanisme de synchronisation peut être assuré, non plus uniquement par des barrières de synchronisation réalisées à l'aide de décompteurs de messages, mais par une sérialisation de la transmission des messages de régulation dynamique des débits de consigne de chaque source vers ses liens et de chaque lien vers ses sources. La sérialisation peut suivre les chemins définis par les canaux de transmission, mais ce n'est pas une obligation. Des chemins différents peuvent être envisagés pour la transmission des paquets de données et pour la sérialisation du mécanisme de synchronisation.

Grâce à une telle sérialisation, le nombre de messages transitant dans le réseau sur puce pour la régularisation dynamique des débits de consigne est largement réduit et les liens du réseau sont moins sollicités. En outre, les calculs détaillés précédemment aux étapes 110 et 120 peuvent être effectués de façon incrémentielle et entrelacée pendant les parcours aller et retour des chemins de sérialisation. Enfin, chaque destinataire final de ces messages a la garantie de recevoir tous les messages attendus.

Le même exemple simple que précédemment, à deux sources S1, S2 et quatre liens L1, L2, L3, L4 partagés entre ces deux sources, est plus précisément illustré par la figure 7. Le mécanisme de synchronisation qui va maintenant être décrit pour cet exemple simple est bien évidemment très facilement généralisable à toute configuration de routage.

Au cours de l'étape 100 (i=0), les débits de consigne des sources S1 et S2 sont initialisés. La valeur initialisée $\rho_{10}$ du débit de consigne de la source S1 doit être transmise aux liens L1, L2 et L3. La valeur initialisée $\rho_{2,0}$ du débit de consigne de la source S2 doit être transmise aux liens L2, L3 et L4. En pratique, les débits de consigne peuvent être initialisés à 0. Dans ce cas, les marges $rc_{lnk,0}$ et $rd_{lnk,0}$ sont initialisées au niveau de chaque lien aux valeurs suivantes :

$$\begin{cases} rc_{lnk,0} = C_{lnk} - \varepsilon \\ rd_{lnk,0} = BF_{lnk} - \varepsilon \end{cases} \qquad (36)$$

Au cours de l'étape 100 également, chaque source transmet un message de déclenchement de l'itération i=1 au premier lien sur son chemin de sérialisation. Dans l'exemple de la figure 7, le chemin de sérialisation de chaque source est son canal de transmission par souci de simplification. Plus précisément, le chemin de sérialisation de la source S1 suit le lien L1, puis le lien L2, puis le lien L3 pour un trajet aller et le lien L3, puis le lien L2, puis le lien L1 pour un trajet retour. Le chemin de sérialisation de la source S2 suit le lien L2, puis le lien L3, puis le lien L4 pour un trajet aller et le lien L4, puis le lien L3, puis le lien L2 pour un trajet retour. La source S1 transmet donc un message de déclenchement de l'itération i=1 au lien L1 et la source S2 transmet un message de déclenchement de l'itération i=1 au lien L2.

Après réception du message de déclenchement de l'itération i=1 sur le trajet aller de l'un quelconque des canaux de transmission, chaque lien concerné exécute de façon incrémentielle et entrelacée une première partie des étapes 110 et 120 définies précédemment pour ce canal de transmission. Une fois qu'il a exécuté cette première partie des étapes 110 et 120, il transmet le message de déclenchement de l'itération i=1 au lien suivant sur le trajet aller, jusqu'au dernier lien du canal de transmission. Chaque lien exécute cette première partie des étapes 110 et 120 pour chaque canal de transmission auquel il appartient, chaque fois qu'il est sollicité par un message de déclenchement correspondant.

Cette exécution consiste à réaliser les calculs suivants à l'itération i=1 :

$$\Delta c_{lnk,1} = \frac{rc_{lnk,0}}{NS_{lnk,0}} \tag{37}$$

$$\Delta d_{lnk,1} = \frac{rd_{lnk,0}}{\sum_{ch \in CCNS_{lnk,0}} D_{ch,lnk}} \tag{38}$$

$$\Delta_{lnk,1} = \text{Min}\big(\Delta c_{lnk,1}, \Delta d_{lnk,1}\big) \tag{39}$$

$$\Delta \rho_{ch,lnk,1} = \text{Min}\big(\Delta \rho_{ch,lnk-1,1}, \Delta_{lnk,1}\big) \tag{40}$$

On notera que la valeur $\Delta \rho_{ch,lnk,1}$ obtenue par les calculs (37) à (40) est différente pour chaque canal de transmission auquel appartient le lien considéré. Cette valeur est transmise au lien suivant lnk+1 dans le trajet aller du canal de transmission correspondant avec le message de déclenchement correspondant.

On notera également que la dernière valeur $\Delta \rho_{ch,L,1}$ obtenue par les calculs (37) à (40) pour le dernier lien d'un canal de transmission est égale à la valeur de marge disponible minimale $\Delta_{ch,1}$ grâce à la minimalisation (40) calculée de proche en proche dans les liens du réseau.

Une fois que le dernier lien L de l'un quelconque des canaux de transmission a terminé son exécution de la première partie des étapes 110 et 120 telle que définie précédemment pour l'itération i=1 et que la valeur $\Delta_{ch,1}$ est connue, il exécute de façon incrémentielle et entrelacée une deuxième partie des étapes 110 et 120 pour l'itération i=1. Une fois qu'il a exécuté cette deuxième partie des étapes 110 et 120, il transmet un message de poursuite de l'itération i=1 au lien suivant sur le trajet retour, jusqu'au premier lien du canal de transmission, l'exécution de la deuxième partie des étapes 110 et 120 se faisant ainsi de proche en proche. Chaque lien exécute cette deuxième partie des étapes 110 et 120 pour chaque canal de transmission auquel il appartient, chaque fois qu'il est sollicité par un message de poursuite correspondant.

Cette exécution consiste à réaliser les calculs suivants à l'itération i=1 :

$$\begin{cases} rc_{lnk,1} = C_{lnk} - \varepsilon - \sum_{ch \in CC_{lnk}} \rho_{ch,1} \\ rd_{lnk,1} = BF_{lnk} - \varepsilon - \sum_{ch \in CC_{lnk}} D_{ch,lnk} \cdot \rho_{ch,1} \end{cases} \tag{41}$$

Ce qui revient à calculer :

$$\begin{cases} rc_{lnk,1} = C_{lnk} - \varepsilon - \sum_{ch \in CC_{lnk}} \rho_{ch,0} - \sum_{ch \in CC_{lnk}} \Delta_{ch,1} \\ rd_{lnk,1} = BF_{lnk} - \varepsilon - \sum_{ch \in CC_{lnk}} D_{ch,lnk} \cdot \rho_{ch,0} - \sum_{ch \in CC_{lnk}} D_{ch,lnk} \cdot \Delta_{ch,1} \end{cases} \tag{42}$$

Ou plus simplement :

$$\begin{cases} rc_{lnk,1} = rc_{lnk,0} - \sum_{ch \in CC_{lnk}} \Delta_{ch,1} \\ rd_{lnk,1} = rd_{lnk,0} - \sum_{ch \in CC_{lnk}} D_{ch,lnk} \cdot \Delta_{ch,1} \end{cases} \tag{43}$$

Par ailleurs, cette exécution comporte les mises à jour du nombre $NS_{lnk,1}$ et de l'ensemble $CCNS_{lnk,1}$ à l'aide des valeurs $\Delta_{ch,1}$. En effet, pour chaque valeur $\Delta_{ch,1}$ nulle (ou en pratique, inférieure à $\varepsilon$), le nombre $NS_{lnk,1}$ peut être décrémenté d'une unité et la source correspondante peut être supprimée de l'ensemble $CCNS_{lnk,1}$. Ces mises à jour peuvent être faites globalement après réception de tous les messages de poursuite de l'itération i=1 pour chacun des canaux ou itérativement à réception de chaque message de poursuite avec validation au dernier reçu.

Une fois que le premier lien de l'un quelconque des canaux de transmission a terminé son exécution de la deuxième partie des étapes 110 et 120 telle que définie précédemment pour l'itération i=1, il transmet un message de poursuite de l'itération i=1 à la source correspondante.

L'itération i=1 se termine alors par une finalisation de l'étape 120 par chaque source. Cette finalisation consiste à effectuer le calcul de l'équation (18) pour i=1 et pour chaque source S1, S2.

La deuxième itération i=2 n'est pas illustrée dans l'exemple de la figure 4, mais le procédé itère comme dans le premier mode de réalisation jusqu'à ce que la condition de fin d'itération de l'étape de test 125 soit vérifiée (i.e. plus de source active non saturée).

A une itération i quelconque autre que la première itération, la première partie des étapes 110 et 120 ne peut être exécutée par un lien lnk de l'un quelconque des canaux de transmission sur le trajet aller que lorsque les deux conditions suivantes sont réalisées :

- ce lien a reçu le message de déclenchement de l'itération i comme indiqué précédemment,
- ce lien a exécuté chaque deuxième partie des étapes 110 et 120 de l'itération i-1.

De même, la deuxième partie des étapes 110 et 120 ne peut être exécutée par un lien lnk de l'un quelconque des canaux de transmission sur le trajet retour que lorsque chaque première partie des étapes 110 et 120 de l'itération i a été exécutée sur l'ensemble des canaux de transmission dans lesquels il se trouve.

L'utilisation d'un décompteur de messages au niveau de chaque lien est donc nécessaire à la fois pour la première partie des étapes 110 et 120 (trajet aller) et la deuxième partie des étapes 110 et 120 (trajet retour).

En revanche, grâce au mécanisme de synchronisation par sérialisation, l'utilisation d'un décompteur de messages n'est pas nécessaire au niveau des sources dans ce deuxième mode de réalisation.

Par généralisation de la première itération, l'exécution de la première partie des étapes 110 et 120 d'une itération i quelconque consiste à réaliser les calculs suivants :

$$\Delta c_{lnk,i} = \frac{rc_{lnk,i-1}}{NS_{lnk,i-1}} \tag{44}$$

$$\Delta d_{lnk,i} = \frac{rd_{lnk,i-1}}{\sum_{ch \in CCNS_{lnk,i-1}} D_{ch,lnk}} \tag{45}$$

$$\Delta_{lnk,i} = \mathrm{Min}\left(\Delta c_{lnk,i}, \Delta d_{lnk,i}\right) \tag{46}$$

$$\Delta\rho_{ch,lnk,i} = \mathrm{Min}\big(\Delta\rho_{ch,lnk-1,i}, \Delta_{lnk,i}\big) \qquad\qquad (47)$$

On notera comme pour la première itération que la dernière valeur $\Delta\rho_{ch,L,i}$ obtenue par les calculs (44) à (47) pour le dernier lien d'un canal de transmission est égale à la valeur de marge disponible minimale $\Delta_{ch,i}$ grâce à la minimalisation (47) calculée de proche en proche dans les liens du réseau.

Par généralisation de la première itération également, l'exécution de la deuxième partie des étapes 110 et 120 d'une itération i quelconque consiste à réaliser les calculs suivants :

$$\begin{cases} rc_{lnk,i} = rc_{lnk,i-1} - \displaystyle\sum_{ch\in CC_{lnk}} \Delta_{ch,i} \\[2mm] rd_{lnk,i} = rd_{lnk,i-1} - \displaystyle\sum_{ch\in CC_{lnk}} D_{ch,lnk} \cdot \Delta_{ch,i-1} \end{cases} \qquad\qquad (48)$$

Par ailleurs, cette exécution comporte les mises à jour du nombre $NS_{lnk,i}$ et de l'ensemble $CCNS_{lnk,i}$ à l'aide des valeurs $\Delta_{ch,i}$.

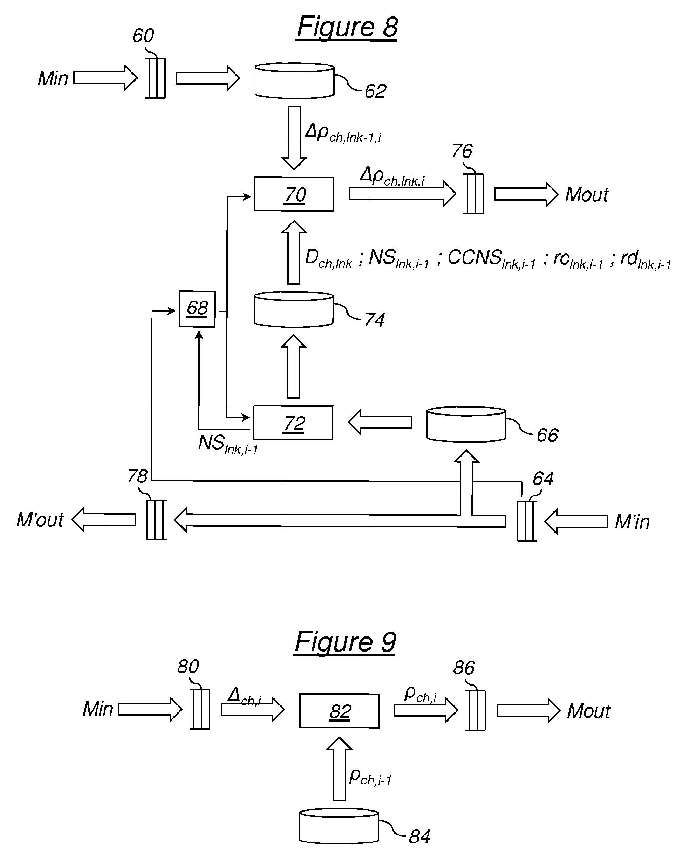

Un exemple d'architecture correspondant au mécanisme de synchronisation de la figure 7 tel que mis en oeuvre dans l'un quelconque des liens lnk est illustré sur la figure 8.

Pour le trajet aller, tout message entrant Min est reçu par une mémoire tampon 60 puis dirigé vers une zone de stockage intermédiaire 62. Pour le trajet retour, tout message entrant M'in est reçu par une mémoire tampon 64 puis dirigé vers une zone de stockage intermédiaire 66. Cette arrivée de message M'in sur le trajet retour déclenche une décrémentation de décompteur local 68. Lorsque le décompteur local 68 atteint la valeur nulle, deux unités fonctionnelles de traitement 70 et 72 en sont informées. L'unité de traitement 70 récupère alors tous les messages Min stockés en zone de stockage intermédiaire 62 pour exécuter la première partie des étapes 110 et 120 du trajet aller d'une itération i, tandis que l'unité de traitement 72 récupère tous les messages M'in stockés en zone de stockage intermédiaire 66 pour exécuter la deuxième partie des étapes 110 et 120 du trajet retour de l'itération précédente i-1.

Les messages Min comportent les valeurs $\Delta\rho_{ch,lnk-1,i}$ issues de liens précédents. L'unité de traitement 70 récupère également en mémoire 74 les autres valeurs nécessaires au calcul de la valeur $\Delta\rho_{ch,lnk,i}$ pour chaque source ch contributrice du lien lnk, à savoir : les coefficients $D_{ch,lnk}$, les valeurs $rc_{lnk,i-1}$, $rd_{lnk,i-1}$ et le nombre de sources actives non saturées $NS_{lnk,i-1}$ à mettre à jour ainsi que l'ensemble $CCNS_{lnk,i-1}$. Elle procède enfin aux calculs (44) à (47) et fournit en mémoire tampon de sortie 76 des messages Mout comportant les valeurs $\Delta\rho_{ch,lnk,i}$ adressée à tous les liens suivants concernés.

Les messages M'in comportent les valeurs $\Delta_{ch,i-1}$ issues de liens précédents dans le trajet retour de l'itération i-1 et destinées à remonter aux sources correspondantes. Ils sont donc également directement routés vers une mémoire tampon de sortie 78 en messages M'out. A l'aide des valeurs $\Delta_{ch,i-1}$ et en procédant au calcul (48), l'unité de traitement 72 procède à la mise à jour des valeurs $rc_{lnk,i-1}$, $rd_{lnk,i-1}$, $NS_{lnk,i-1}$ ainsi que l'ensemble $CCNS_{lnk,i-1}$. Cela provoque en outre la réinitialisation du décompteur 68 à la valeur $NS_{lnk,i-1}$.

Un exemple d'architecture correspondant au mécanisme de synchronisation de la figure 7 tel que mis en oeuvre dans l'une quelconque des sources ch est illustré sur la figure 9.

Tout message entrant Min est reçu par une mémoire tampon 80 puis dirigé vers une unité de traitement 82 qui récupère ainsi la valeur de débit supplémentaire à appliquer $\Delta_{ch,i}$. Elle récupère également en mémoire 84 la dernière valeur de débit de consigne $\rho_{ch,i-1}$. Elle procède enfin au calcul (18) et fournit en mémoire tampon de sortie 86 un message Mout comportant la valeur mise à jour du débit de consigne $\rho_{ch,i}$. Ce calcul provoque l'application du nouveau débit de consigne par le limiteur de trafic concerné.

Les architectures telles que représentées schématiquement sur les figures 5, 6, 8 et 9 comportent des unités de calcul 36, 48, 70, 72 et 82 qui peuvent être mises en oeuvre par programmation informatique. Ces architectures comportent ainsi fonctionnellement plusieurs programmes d'ordinateurs ou plusieurs fonctions d'un même programme d'ordinateur. On notera en effet que les unités de calcul 36, 48, 70, 72 et 82 sont présentées comme distinctes, mais cette distinction est purement fonctionnelle. Elles pourraient tout aussi bien être regroupées selon toutes les combinaisons possibles en un ou plusieurs logiciels. Leurs fonctions pourraient aussi être au moins en partie micro programmées ou micro câblées dans des circuits intégrés dédiés pour accélérer les traitements. Ainsi, en variante, les dispositifs informatiques mettant en oeuvre les unités de calcul 36, 48, 70, 72 et 82 pourraient être remplacés par des dispositifs électroniques composés uniquement de circuits numériques (sans programme d'ordinateur) pour la réalisation des mêmes actions.

Il apparaît clairement qu'un procédé de régulation dynamique de débits de consigne tel que celui décrit précédemment permet de parvenir à un équilibre vraiment optimisé entre les différents débits de différents canaux de transmission d'un réseau sur puce pour une configuration de routage donnée.

En outre, la combinaison d'une répartition astucieuse des calculs avec une sérialisation des messages dédiés à la régulation dynamique, comme cela a été envisagé dans le deuxième mode de réalisation précédemment décrit, permet une gestion originale du mécanisme de synchronisation induit par une telle régulation dynamique.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Procédé de régulation dynamique de débits de consigne de sources émettrices de paquets de données vers des cibles réceptrices de ces paquets de données dans un réseau sur puce (10) comportant une pluralité de noeuds ($N_{i,j}$), parmi lesquels se trouvent les sources et les cibles, et une pluralité de liens ($L_{i,j}(N)$, $L_{i,j}(S)$, $L_{i,j}(W)$, $L_{i,j}(E)$) entre ces noeuds pour la transmission des paquets de données, comportant :

   - pour chaque lien du réseau sur puce sollicité par la transmission des paquets de données, l'estimation (110) d'une marge de débit disponible incluant l'estimation ($112_1$, ..., $112_{lnk}$, ..., $112_L$) d'une première marge calculée sur la base d'une capacité de débit maximal ($C_{lnk}$) du lien,
   - pour chaque source émettrice d'au moins un paquet de données, le calcul et l'application (120) d'une mise à jour de son débit de consigne en fonction des marges de débits disponibles estimées,

   **caractérisé en ce que** l'estimation (110) de la marge de débit disponible pour chaque lien comporte en outre :

   - l'estimation ($114_1$, ..., $114_{lnk}$, ..., $114_L$) d'une deuxième marge calculée sur la base d'une capacité d'absorption locale maximale ($BF_{lnk}$), par mémoire tampon, de dépassements sporadiques possibles des débits de consigne,
   - la détermination ($116_1$, ..., $116_{lnk}$, ..., $116_L$) d'une valeur de la marge de débit disponible en fonction des première et deuxième marges calculées.

2. Procédé de régulation dynamique de débits de consigne selon la revendication 1, dans lequel, pour une configuration de routage donnée incluant un ensemble de canaux de transmission des paquets de données entre les sources et les cibles, les étapes d'estimation (110) des marges de débits disponibles et de calcul (120) de mises à jour des débits de consigne sont exécutées uniquement pour des canaux de transmission non saturés, c'est-à-dire des canaux de transmission n'ayant encore aucun lien sans marge de débit disponible, et répétées jusqu'à ce que tous les canaux de transmission soient saturés.

3. Procédé de régulation dynamique de débits de consigne selon la revendication 2, dans lequel :

   - l'estimation ($112_1$, ..., $112_{lnk}$, ..., $112_L$) de la première marge notée « $rc_{lnk}$ » pour chaque lien noté « lnk », calculée sur la base de la capacité de débit maximal du lien notée « $C_{lnk}$ », est effectuée sur la base de l'équation suivante :

$$rc_{lnk} = C_{lnk} - \varepsilon - \sum_{ch \in CC_{lnk}} \rho_{ch} \, ,$$

   dans laquelle $\varepsilon$ est une constante de marge résiduelle en dessous de laquelle on considère que la marge de débit disponible est nulle pour ce lien, $CC_{lnk}$ est l'ensemble des canaux de transmission notés « ch » qui incluent le lien lnk et $\rho_{ch}$ désigne le débit de consigne du canal de transmission ch, et

   - l'estimation ($114_1$, ..., $114_{lnk}$, ..., $114_L$) de la deuxième marge notée « $rd_{lnk}$ » pour chaque lien lnk, calculée sur la base de la capacité d'absorption locale maximale du lien notée « $BF_{lnk}$ », est effectuée sur la base de l'équation suivante :

$$rd_{lnk} = BF_{lnk} - \varepsilon - \sum_{ch \in CC_{lnk}} D_{ch,lnk} \cdot \rho_{ch} \, ,$$

dans laquelle $D_{ch,lnk}$ désigne un coefficient prédéterminé propre à chaque lien de chaque canal de transmission.

4. Procédé de régulation dynamique de débits de consigne selon la revendication 3, dans lequel la régulation de débit étant faite à la source par fenêtre glissante selon une discipline d'arbitrage de type « work conserving » :

- la capacité d'absorption locale maximale de chaque lien lnk est définie par l'équation suivante :

$$BF_{lnk} = QSIZE - \frac{(N_{lnk} - 1)}{N_{lnk}} \cdot DMAX \cdot Tw \, ,$$

dans laquelle QSIZE est la taille de la mémoire tampon associée au lien lnk, $N_{lnk}$ est le nombre de canaux de transmission passant par le lien lnk, DMAX est une constante de débit instantané maximal d'injection et Tw est la longueur de la fenêtre glissante, et

- chaque coefficient $D_{ch,lnk}$ est défini par l'équation suivante :

$$D_{ch,lnk} = \sum_{l \in RR_{ch,lnk}} d_{l,ch} \, ,$$

dans laquelle $RR_{ch,lnk}$ est l'ensemble des liens traversés en amont du lien lnk dans le canal de transmission ch, « l » désignant l'un de ces liens, et $d_{l,ch}$ est un coefficient défini par $d_{l,ch} = (nd_l - 1) \cdot PSIZE$, où $nd_l$ est le nombre de directions contributrices sur la mémoire tampon associée au lien l et PSIZE est la taille maximale des paquets de données exprimée dans la même unité que QSIZE.

5. Procédé de régulation dynamique de débits de consigne selon l'une quelconque des revendications 1 à 4, dans lequel les étapes d'estimation (110) des marges de débits disponibles et de calcul (120) de mises à jour des débits de consigne sont exécutées de façon séquentielle, cette séquence étant elle-même exécutée de façon itérative.

6. Procédé de régulation dynamique de débits de consigne selon la revendication 5, dans lequel les étapes d'estimation (110) des marges de débits disponibles et de calcul (120) de mises à jour des débits de consigne sont séquentiellement exécutées à l'aide de barrières de synchronisation (CL1, CL2, CL3, CL4, CS1, CS2) implémentées sous la forme de décompteurs de messages (34, 46) pour chaque lien du réseau sur puce sollicité par la transmission des paquets de données et pour chaque source émettrice d'au moins un paquet de données.

7. Procédé de régulation dynamique de débits de consigne selon l'une quelconque des revendications 1 à 4, dans lequel les étapes d'estimation (110) des marges de débits disponibles et de calcul (120) de mises à jour des débits de consigne sont exécutées de façon incrémentielle et entrelacée par une sérialisation de messages de régulation dynamique des débits de consigne selon des chemins prédéfinis.

8. Procédé de régulation dynamique de débits de consigne selon l'une quelconque des revendications 1 à 7, dans lequel la valeur de marge de débit disponible est déterminée ($116_1$, ..., $116_{lnk}$, ..., $116_L$) pour chaque lien en tant que minimum entre les première et deuxième marges calculées pour ce lien.

9. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé de régulation dynamique de débits de consigne selon l'une quelconque des revendications 1 à 8, lorsque ledit programme est exécuté sur un ordinateur.

10. Dispositif de traitement de données à réseau sur puce (10), comportant :

- une pluralité de noeuds ($N_{i,j}$), parmi lesquels se trouvent des sources émettrices de paquets de données et des cibles réceptrices de ces paquets de données,

- une pluralité de liens ($L_{i,j}$(N), $L_{i,j}$(S), $L_{i,j}$(W), $L_{i,j}$(E)) entre ces noeuds pour la transmission des paquets de données, et
- des calculateurs (36, 48 ; 70, 72, 82) de régulation dynamique de débits de consigne des sources, répartis entre les noeuds du réseau sur puce et programmés pour :

• pour chaque lien du réseau sur puce sollicité par la transmission des paquets de données, estimer une marge de débit disponible en estimant une première marge calculée sur la base d'une capacité de débit maximal ($C_{lnk}$) du lien,
• pour chaque source émettrice de paquets de données, calculer une mise à jour de son débit de consigne ($\rho_{ch,i}$) en fonction des marges de débits disponibles estimées,

**caractérisé en ce que** chaque calculateur (36 ; 70, 72) programmé pour estimer la marge de débit disponible de l'un quelconque des liens est en outre programmé pour:

- estimer une deuxième marge calculée sur la base d'une capacité d'absorption locale maximale ($BF_{lnk}$), par mémoire tampon, de dépassements sporadiques possibles des débits de consigne,
- déterminer une valeur de la marge de débit disponible en fonction des première et deuxième marges calculées.

## Patentansprüche

1. Verfahren zur dynamischen Regulierung von Sollwert-Datenraten von Datenpakt-Ausgabequellen hin zu Aufnahmezielen dieser Datenpakete in einem Netz auf Chip (10), umfassend eine Vielzahl von Knoten ($N_{i,j}$), unter denen sich die Quellen und die Ziele befinden, und eine Vielzahl von Verbindungen ($L_{i,j}$ (N) , $L_{i,j}$ (S), $L_{i,j}$ (W), $L_{i,j}$ (E) ) zwischen diesen Knoten für die Übertragung von Datenpaketen, umfassend:

- für jede Verbindung des Netzes auf Chip, das durch die Übertragung der Datenpakete angefordert wird, Schätzen (110) einer verfügbaren Datenratenspanne, darin eingeschlossen die Schätzung ($112_1$, ..., $112_{lnk}$, ..., $112_L$) einer ersten Spanne, berechnet auf der Grundlage einer maximalen Datenratenkapazität ($C_{lnk}$) der Verbindung,
- für jede Ausgabequelle von mindestens einem Datenpaket die Berechnung und die Anwendung (120) eine Aktualisierung ihrer Datenrate in Funktion der geschätzten verfügbaren Datenratenspannen,

**dadurch gekennzeichnet, dass** die Schätzung (110) der verfügbaren Datenratenspanne für jede Verbindung außerdem Folgendes umfasst:

- die Schätzung ($114_1$, ..., $114_{lnk}$, ... , $114_L$) einer zweiten Spanne, berechnet auf der Grundlage einer maximalen lokalen Absorptionskapazität ($BF_{lnk}$) durch Pufferspeicher von möglichen sporadischen Überschreitungen der Sollwert-Datenraten,
- das Bestimmen ($116_1$, ..., $116_{lnk}$, ... , $116_L$) eines Werts der verfügbaren Datenratenspanne in Funktion der ersten und der zweiten berechneten Spanne.

2. Verfahren zur dynamischen Regulierung von Sollwert-Datenraten nach Anspruch 1, wobei für eine gegebene Routing-Konfiguration, darin eingeschlossen eine Einheit von Kanälen zur Übertragung der Datenpakete zwischen den Quellen und den Zielen, die Schritte des Schätzens (110) der verfügbaren Datenratenspannen und des Berechnens (120) der Aktualisierungen der Sollwert-Datenraten ausschließlich für nicht gesättigte Übertragungskanäle durchgeführt werden, d.h. Übertragungskanäle, die noch keine Verbindung ohne verfügbare Datenratenspanne aufweisen, und wiederholt werden, bis alle Übertragungskanäle gesättigt sind.

3. Verfahren zur dynamischen Regulierung von Sollwert-Datenraten nach Anspruch 2, wobei:

- die Schätzung ($112_1$, ..., $112_{lnk}$, ..., $112_L$) der ersten Spanne, bezeichnet als "$rc_{lnk}$" für jede Verbindung, die als "lnk" bezeichnet wird, berechnet auf der Grundlage der maximalen Datenratenkapazität der Verbindung, bezeichnet als "$C_{lnk}$", auf der Grundlage der folgenden Gleichung durchgeführt wird:

$$rc_{lnk} = C_{lnk} - \varepsilon - \sum_{ch \in CC_{lnk}} \rho_{ch} \,,$$

wobei $\varepsilon$ eine konstante Restspanne ist, unter der erachtet wird, dass die verfügbare Datenratenspanne für diese Verbindung null ist, $CC_{lnk}$ die Gesamtheit der Übertragungskanäle ist, die als "ch" bezeichnet werden, die die Verbindung lnk umfassen, und $\rho_{ch}$ den Datenraten-Sollwert des Übertragungskanals ch kennzeichnet, und

- die Schätzung ($114_1$, ..., $114_{lnk}$, ..., $114_L$) der zweiten Spanne, bezeichnet als "$rd_{lnk}$" für jede Verbindung, die als "lnk" bezeichnet wird, berechnet auf der Grundlage der maximalen lokalen Absorptionskapazität der Verbindung, bezeichnet als "$BF_{lnk}$", auf der Grundlage der folgenden Gleichung durchgeführt wird:

$$rd_{lnk} = BF_{lnk} - \varepsilon - \sum_{ch \in CC_{lnk}} D_{ch,lnk} \cdot \rho_{ch} \,,$$

wobei $D_{ch,lnk}$ einen vorbestimmten Koeffizienten kennzeichnet, der jeder Verbindung jedes Übertragungskanals zu eigen ist.

4. Verfahren zur dynamischen Regulierung von Sollwert-Datenraten nach Anspruch 3, wobei die Datenraten-Regulierung an der Quelle durch Gleitfenster gemäß einer Eintscheidungsdisziplin vom Typ "Work Conserving" erfolgt:

- die maximale lokale Absorptionskapazität jeder Verbindung lnk ist gemäß der folgenden Gleichung definiert:

$$BF_{lnk} = QSIZE - \frac{(N_{lnk} - 1)}{N_{lnk}} \cdot DMAX \cdot Tw \,,$$

wobei QSIZE die Größe des Pufferspeichers, assoziiert mit der Verbindung lnk, ist, $N_{lnk}$ die Anzahl der Übertragungskanäle ist, die durch die Verbindung lnk verlaufen, DMAX eine maximale momentane Injektions-Datenratenkonstante und Tw die Länge des Gleitfensters ist, und

- jeder Koeffizient $D_{ch,lnk}$ durch die folgende Gleichung definiert ist:

$$D_{ch,lnk} = \sum_{l \in RR_{ch,lnk}} d_{l,ch} \,,$$

wobei $RR_{ch,lnk}$ die Gesamtheit der Verbindungen ist, die vorgelagert von der Verbindung lnk im Übertragungskanal ch durchquert werden, wobei "l" eine dieser Verbindungen bezeichnet, und $d_{l,ch}$ ein Koeffizient ist, definiert durch $d_{l,ch} = (nd_l - 1)$ PSIZE, wobei $nd_l$ die Anzahl der Beitragsrichtungen auf dem Pufferspeicher, assoziiert mit der Verbindung l, ist, und PSIZE die maximale Größe der Datenpakete ist, ausgedrückt in der gleichen Einheit wie QSIZE.

5. Verfahren zur dynamischen Regulierung von Sollwert-Datenraten nach einem der Ansprüche 1 bis 4, wobei die Schritte des Schätzens (110) der verfügbaren Datenratenspannen und des Berechnens (120) der Aktualisierungen der Sollwert-Datenraten auf sequenzielle Weise durchgeführt werden, wobei diese Sequenz selbst auf iterative Weise durchgeführt wird.

6. Verfahren zur dynamischen Regulierung von Sollwert-Datenraten nach Anspruch 5, wobei die Schritte des Schätzens (110) der verfügbaren Datenratenspannen und des Berechnens (120) der Aktualisierungen der Sollwert-Datenraten sequenziell mit Hilfe von Synchronisierungsbarrieren (CL1, CL2, CL3, CL4, CS1, CS2) durchgeführt werden, die in Form von Meldungs-Abwärtszählern (34, 46) für jede Verbindung des Netzes auf Chip implementiert werden, die durch die Übertragung von Datenpaketen angefordert wird, und für jede Ausgabequelle von mindestens einem Datenpaket.

**7.** Verfahren zur dynamischen Regulierung von Sollwert-Datenraten nach einem der Ansprüche 1 bis 4, wobei die Schritte des Schätzens (110) der verfügbaren Datenratenspannen und des Berechnens (120) der Aktualisierung der Sollwert-Datenraten auf zunehmende und miteinander verflochtene Weise durch eine Meldungs-Serialisierung zur dynamischen Regulierung von Sollwert-Datenraten gemäß vordefinierten Wegen durchgeführt werden.

**8.** Verfahren zur dynamischen Regulierung von Sollwert-Datenraten nach einem der Ansprüche 1 bis 7, wobei der Wert der verfügbaren Datenratenspanne für jede Verbindung als Minimum zwischen der ersten und der zweiten Spanne, berechnet für diese Verbindung, bestimmt wird ($116_1$, ..., $116_{lnk}$, ... , $116_L$).

**9.** Computerprogramm, das von einem Kommunikationsnetz heruntergeladen werden kann und/oder auf einem Träger registriert ist, der von einem Computer lesbar ist und/oder von einem Prozessor ausgeführt werden kann, **dadurch gekennzeichnet, dass** es Anweisungen für die Ausführung der Schritte eines Verfahrens zur dynamischen Regulierung von Sollwert-Datenraten nach einem der Ansprüche 1 bis 8 umfasst, wenn das Programm auf einem Computer ausgeführt wird.

**10.** Vorrichtung zur Verarbeitung von Daten mit Netz auf Chip (10), umfassend:

- eine Vielzahl von Knoten ($N_{i,j}$), unter denen sich Ausgabequellen von Datenpaketen und Aufnahmeziele dieser Datenpakete befinden,
- eine Vielzahl von Verbindungen (Li,j(N), Li,j(S), Li,j(W), Li,j(E)) zwischen diesen Knoten für die Übertragung der Datenpakete, und
- Rechner (36, 48; 70, 72, 82) zur dynamischen Regulierung von Sollwert-Datenraten der Quellen, die zwischen den Knoten des Netzes auf Chip verteilt und für Folgendes programmiert sind:

  • für jede Verbindung des Netzes auf Chip, das durch die Übertragung der Datenpakete angefordert wird, Schätzen einer verfügbaren Datenratenspanne durch Schätzen einer ersten Spanne, berechnet auf der Grundlage einer maximalen Datenratenkapazität ($C_{lnk}$) der Verbindung,
  • für jede Ausgabequelle von Datenpaketen Berechnen einer Anwendung ihrer Sollwert-Datenrate ($\rho_{ch,i}$) in Funktion der geschätzten verfügbaren Datenratenspannen,

**dadurch gekennzeichnet, dass** der Rechner (36; 70, 72), der programmiert ist, um die verfügbare Datenratenspanne einer beliebigen der Verbindungen zu schätzen, außerdem programmiert ist, um:

- eine zweite Spanne, berechnet auf der Grundlage einer maximalen lokalen Absorptionskapazität ($BF_{lnk}$) durch Pufferspeicher von möglichen sporadischen Überschreitungen der Sollwert-Datenraten zu schätzen,
- einen Wert der verfügbaren Datenratenspanne in Funktion der ersten und der zweiten berechneten Spanne zu bestimmen.

**Claims**

**1.** A method for dynamically controlling throughput set points of emitting sources of data packets to receiving targets of these data packets in a network on a chip (10) comprising a plurality of nodes ($N_{i,j}$), within which the sources and the targets are found, and a plurality of links ($L_{i,j}(N)$, $L_{i,j}(S)$, $L_{i,j}(W)$, $L_{i,j}(E)$) between these nodes for the transmission of data packets, comprising:

- for each link of the network on a chip solicited by the transmission of data packets, the estimation (110) of an available throughput margin that includes the estimation ($112_1$, ..., $112_{lnk}$, ..., $112_L$) of a first margin calculated based on a maximum throughput capacity ($C_{lnk}$) of the link,
- for each emitting source of at least one data packet, the calculation and the application (120) of an update of its throughput set point according to the estimated available throughput margins,

**characterized in that** the estimation (110) of the available throughput margin for each link further comprises:

- the estimation ($114_1$, ..., $114_{lnk}$, ..., $114_L$) of a second margin calculated based on a maximum local absorption capacity ($BF_{lnk}$), by a buffer memory, of possible sporadic overflows of the throughput set points,
- the determination ($116_1$, ..., $116_{lnk}$, ..., $116_L$) of a value of the available throughput margin according to the first and second calculated margins.

2. The method for dynamically controlling throughput set points as claimed in claim 1, wherein, for a given routing configuration that includes a set of transmission channels of the data packets between the sources and the targets, the steps of estimating (110) the available throughput margins and of calculating (120) updates of the throughput set points are executed solely for non-saturated transmission channels, i.e. transmission channels that do not yet have any link without available throughput margin, and repeated until all of the transmission channels are saturated.

3. The method for dynamically controlling throughput set points as claimed in claim 2, wherein:

   - the estimation ($112_1$, ..., $112_{lnk}$, ..., $112_L$) of the first margin noted as "$rc_{lnk}$" for each link noted as "lnk", calculated based on the maximum throughput capacity of the link noted as "$C_{lnk}$", is carried out on the basis of the following equation:

$$rc_{lnk} = C_{lnk} - \varepsilon - \sum_{ch \in CC_{lnk}} \rho_{ch} \,,$$

   wherein $\varepsilon$ is a residual margin constant below which it is considered that the available throughput margin is zero for this link, $CC_{lnk}$ is all of the transmission channels noted as "ch" which include the link lnk and $\rho_{ch}$ designates the throughput set point of the transmission channel ch, and

   - the estimation ($114_1$, ..., $114_{lnk}$, ..., $114_L$) of the second margin noted as "$rd_{lnk}$" for each link lnk, calculated based on the maximum local absorption capacity of the link noted as "$BF_{lnk}$", is carried out on the basis of the following equation:

$$rd_{lnk} = BF_{lnk} - \varepsilon - \sum_{ch \in CC_{lnk}} D_{ch,lnk} \cdot \rho_{ch} \,,$$

   wherein $D_{ch,lnk}$ designates a predetermined coefficient that is proper to each link of each transmission channel.

4. The method for dynamically controlling throughput set points as claimed in claim 3, wherein as the controlling of the throughput is carried out at the source via a sliding window according to an arbitration discipline of the "work conserving" type:

   - the maximum local absorption capacity of each link lnk is defined by the following equation:

$$BF_{lnk} = QSIZE - \frac{(N_{lnk} - 1)}{N_{lnk}} \cdot DMAX \cdot Tw \,,$$

   wherein QSIZE is the size of the buffer memory associated with the link lnk, $N_{lnk}$ is the number of transmission channels passing through the link lnk, DMAX is an injection maximum instant throughput constant and Tw is the length of the sliding window, and

   - each coefficient $D_{ch,lnk}$ is defined by the following equation:

$$D_{ch,lnk} = \sum_{l \in RR_{ch,lnk}} d_{l,ch} \,,$$

   wherein $RR_{ch,lnk}$ is all of the links passed through upstream of the link lnk in the transmission channel ch, with "l" designating one of these links, and $d_{l,ch}$ is a coefficient defined by $d_{l,ch} = (nd_l - 1)$. *PSIZE,* wherein $nd_l$ is the number of contributing directions on the buffer memory associated with the link l and PSIZE is the maximum size of the data packets expressed in the same unit as QSIZE.

5. The method for dynamically controlling throughput set points as claimed in any of claims 1 to 4, wherein the steps of estimating (110) the available throughput margins and of calculating (120) updates of the throughput set points are executed sequentially, with this sequence itself being executed iteratively.

6. The method for dynamically controlling throughput set points as claimed in claim 5, wherein the steps of estimating (110) available throughput margins and of calculating (120) updates of the throughput set points are executed sequentially using synchronization barriers (CL1, CL2, CL3, CL4, CS1, CS2) implemented in the form of message down-counters (34, 46) for each link of the network on a chip solicited by the transmission of data packets and for each emitting source of at least one data packet.

7. The method for dynamically controlling throughput set points as claimed in any of claims 1 to 4, wherein the steps of estimating (110) the available throughput margins and of calculating (120) updates of the throughput set points are executed incrementally and are interlaced by a serialization of dynamic control messages of the throughput set points according to predefined paths.

8. The method for dynamically controlling throughput set points as claimed in any of claims 1 to 7, wherein the value of the available throughput margin is determined ($116_1$, ..., $116_{lnk}$, ..., $116_L$) for each link as a minimum between the first and second margins calculated for this link.

9. A computer program that can be downloaded from a communication network and/or recorded on a support that can be read by a computer and/or executed by a processor, comprising instructions for the execution of the steps of a method for dynamically controlling throughput set points as claimed in any of claims 1 to 8, when said program is executed on a computer.

10. A network on a chip data processing device (10), comprising:

- a plurality of nodes ($N_{i,j}$), within which are found emitting sources of data packets and receiving targets of these data packets,
- a plurality of links ($L_{i,j}(N)$, $L_{i,j}(S)$, $L_{i,j}(W)$, $L_{i,j}(E)$) between these nodes for the transmission of data packets, and
- calculators (36, 48; 70, 72, 82) for the dynamic control of throughput set points of the sources, distributed between the nodes of the network on a chip and programmed to:

• for each link of the network on a chip solicited by the transmission of data packets, estimate an available throughput margin by estimating a first margin calculated based on a maximum throughput capacity ($C_{lnk}$) of the link,
• for each emitting source of data packets, calculate an update of its throughput set point ($\rho_{ch,i}$) according to the estimated available throughput margins,

characterized in that each calculator (36; 70, 72) programmed to estimate the available throughput margin of any one of the links is further programmed to:

- estimate a second margin calculated based on a maximum local absorption capacity ($BF_{lnk}$), by a buffer memory, of possible sporadic overflows of the throughput set points,
- determine a value of the available throughput margin according to the first and second calculated margins.

$P_{i,j}$   $N_{i,j}$   $P_{i,j+1}$   $N_{i,j+1}$

$18_{i,j}$   $16_{i,j}$   $14_{i,j}$

$12_{i,j}$

$18_{i,j+1}$   $16_{i,j+1}$   $14_{i,j+1}$

$12_{i,j+1}$

$L_{i,j}(N)$   $L_{i,j+1}(N)$

$L_{i,j}(W)$

$L_{i,j}(E) = L_{i,j+1}(W)$   $L_{i,j+1}(E)$

$R_{i,j}$   $R_{i,j+1}$

10

$P_{i,j}$   $P_{i,j+1}$

$18_{i+1,j}$   $16_{i+1,j}$   $14_{i+1,j}$

$12_{i+1,j}$

$18_{i+1,j+1}$   $16_{i+1,j+1}$   $14_{i+1,j+1}$

$12_{i+1,j+1}$

$L_{i,j}(S)$   $L_{i+1,j}(N)$   $L_{i+1,j+1}(N)$   $L_{i,j+1}(S)$

$L_{i+1,j}(W)$

$L_{i+1,j}(E) = L_{i+1,j+1}(W)$   $L_{i+1,j+1}(E)$

$R_{i+1,j}$

$N_{i+1,j}$   $R_{i+1,j+1}$   $N_{i+1,j+1}$

$L_{i+1,j}(S)$   $L_{i+1,j+1}(S)$

*Figure 1*

$L_{i,j}(N)$

$A_{i,j}(N)$

$R_{i,j}$   $L_{i,j}(P)$

$L_{i,j}(P)$   $L_{i,j}(P)$

$20_{i,j}(N)$   $20_{i,j}(E)$

*Figure 2*

$A_{i,j}(W)$   $A_{i,j}(E)$

$L_{i,j}(W)$

$20_{i,j}(S)$

$L_{i,j}(P)$   $L_{i,j}(E)$

$L_{i,j}(P)$

$20_{i,j}(W)$

$A_{i,j}(S)$

$L_{i,j}(S)$

## Figure 3

```
                              ┌──────┐
                              │ 100  │
                              └──────┘
                                 │
                                 ▼
                              ┌──────┐
                              │ 105  │
                              └──────┘
                                 │
  ┌──────────────────────────────────────────────────────────────┐
  │  110                           │                               │
  │               ┌────────────────┼──────────────────┐           │
  │               ▼                ▼                   ▼           │
  │           ┌───────┐        ┌────────┐         ┌───────┐        │
  │           │ 112₁  │        │ 112ₗₙₖ │         │ 112_L │        │
  │           └───────┘        └────────┘         └───────┘        │
  │               │                │                   │           │
  │               ▼                ▼                   ▼           │
  │           ┌───────┐        ┌────────┐         ┌───────┐        │
  │           │ 114₁  │  ...   │ 114ₗₙₖ │   ...   │ 114_L │        │
  │           └───────┘        └────────┘         └───────┘        │
  │               │                │                   │           │
  │               ▼                ▼                   ▼           │
  │           ┌───────┐        ┌────────┐         ┌───────┐        │
  │           │ 116₁  │        │ 116ₗₙₖ │         │ 116_L │        │
  │           └───────┘        └────────┘         └───────┘        │
  └──────────────────────────────────────────────────────────────┘
```

$112_1$  $112_{lnk}$  $112_L$  $114_1$  $114_{lnk}$  $114_L$  $116_1$  $116_{lnk}$  $116_L$

$118$

$122_1$  $122_{ch}$  $122_N$  $124_1$  $124_{ch}$  $124_N$

$125$

$130$

## Figure 4

## _Figure 5_

30

$Min$ →

32

$\rho_{ch,i-1}$

40

$\Delta_{Ink,i}$ → $Mout$

34

36

$NS_{Ink,i}$

$D_{ch,Ink}$ ; $C_{Ink}$ ; $BF_{Ink}$ ; $NS_{Ink,i-1}$ ; $CCNS_{Ink,i-1}$

38

## _Figure 6_

42

$Min$ →

44

$\Delta_{Ink,i}$

46

48

52

$\rho_{ch,i}$ → $Mout$

$\rho_{ch,i-1}$

50

## Figure 7

## Figure 8

$Min \Rightarrow$ 60

62

$\Delta\rho_{ch,lnk-1,i}$

$\Delta\rho_{ch,lnk,i}$  76

$\underline{70}$ $\Rightarrow$ $\Rightarrow Mout$

$D_{ch,lnk}$ ; $NS_{lnk,i-1}$ ; $CCNS_{lnk,i-1}$ ; $rc_{lnk,i-1}$ ; $rd_{lnk,i-1}$

$\underline{68}$

74

$\underline{72}$ 66

$NS_{lnk,i-1}$

78 64

$M'out \Leftarrow$ $\Leftarrow M'in$

## Figure 9

80 86

$Min \Rightarrow$ $\Delta_{ch,i} \rightarrow$ $\underline{82}$ $\rho_{ch,i} \Rightarrow$ $\Rightarrow Mout$

$\rho_{ch,i-1}$

84

**EP 2 978 178 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KELLY.** Charging and rate control for elastic traffic. *European Transactions on Télécommunications,* 1997, vol. 8, 33-37
- **LOW et al.** Optimization flow control, I: basic algorithm and convergence. *IEEE/ACM Transactions on Networking,* Décembre 1999, vol. 7 (6), 861-874

- **ZHANG.** Service disciplines for guaranteed performance service in packet-switching networks. *Proceedings of the IEEE,* Octobre 1995, vol. 83 (10
- **CRUZ.** A calculus for network delay, Part I: network elements in isolation. *IEEE Transactions on Information Theory,* Janvier 1991, vol. 37 (1
- **ZHANG.** *Bottle Neck Flow Control,* 07 Juillet 1981, 954-962